# EUROPEAN PATENT SPECIFICATION

(11) **EP 2 269 731 B1**
(45) Date of publication and mention of the grant of the patent: **11.07.2012**
(21) Application number: 09734310.7
(22) Date of filing: 17.04.2009
(51) Int. Cl.: B01J 23/34, B01D 53/94, B01J 23/68, F01N 3/02, F01N 3/10, B01J 23/66, B01J 23/00, B01J 23/10

(54) **OXIDATION CATALYST AND OXIDATION CATALYST DEVICE FOR EXHAUST GAS PURIFICATION**
OXIDATIONSKATALYSATOR UND OXIDATIONSKATALYSATORVORRICHTUNG ZUR ABGASREINIGUNG
CATALYSEUR D'OXYDATION ET DISPOSITIF À CATALYSEUR D'OXYDATION POUR PURIFIER DES GAZ D'ÉCHAPPEMENT

(30) Priority: 22.04.2008 JP 2008111034; 15.07.2008 JP 2008184105; 17.02.2009 JP 2009034083; 23.03.2009 JP 2009070203
(43) Date of publication of application: 05.01.2011
(73) Proprietor: Honda Motor Co., Ltd., Minato-ku Tokyo 107-8556 (JP)
(72) Inventor: ISOGAI, Yuji, Wako-shi Saitama 3510193 (JP); TANAAMI, Kiyoshi, Wako-shi Saitama 3510193 (JP); ISHIZAKI, Keita, Wako-shi Saitama 3510193 (JP)
(74) Representative: Böhm, Brigitte
(86) International application number: PCT/JP2009/001775
(87) International publication number: WO 2009/130869

(56) References cited:
- EP-A1- 1 842 588
- EP-A1- 1 914 000
- JP-A- 7 116 519
- JP-A- 2002 188 435
- JP-A- 2004 043 217
- JP-A- 2007 237 012
- JP-A- 2007 275 738
- JP-A- 2008 100 184
- J.A. ALONSO ET AL.: "EVOLUTION OF THE JAHN-TELLER DISTORTION OF MnO6 OCTAHEDRA IN RmNo3 PEROVSKITES (R=Pr,Nd,Dy,Tb,Ho,Er,Y) : A NEUTRON DIFFRACTION STUDY.", INORG. CHEM., vol. 39, 2 November 2000 (2000-11-02), pages 917-923, XP002628819,

## Description

### Technical Field

The present invention relates to an oxidation catalyst which oxidizes contents such as particulates and hydrocarbons included in an exhaust gas of an internal combustion engine to purify the gas, and an oxidation catalyst device for exhaust gas purification.

### Background Art

Conventionally, an oxidation catalyst device for exhaust gas purification is known, which uses an oxidation catalyst formed from a perovskite-type composite metal oxide so as to oxidize contents such as particulates and hydrocarbons included in an exhaust gas of an internal combustion engine and purify the gas.

There is an oxidation catalyst device as the above described oxidation catalyst device for exhaust gas purification, which includes a porous filter substrate having a wall flow structure in which one end is an exhaust-gas inflow part and the other end is an exhaust-gas outflow part, and an oxidation catalyst carried on the porous filter substrate.

### (See Patent Literature 1, for instance.)

The above described porous filter substrate having the above described wall flow structure includes a plurality of inflow cells, a plurality of outflow cells, and cell partition walls which separate the inflow cell and the outflow cell. In the plurality of the above described inflow cells, the exhaust-gas inflow parts of a plurality of through holes which are formed so as to penetrate in the axial direction are opened, while the exhaust-gas outflow parts are blocked. In the plurality of the above described outflow cells, the exhaust-gas inflow parts of the plurality of the above described through holes are blocked, while the exhaust-gas outflow parts are opened.

On the other hand, the above described oxidation catalyst includes a first catalyst layer which is carried on a surface of the above described cell partition wall in the above described inflow cell side, and a second catalyst layer which is carried on the surface of a wall face which forms a pore of the above described porous filter substrate.

The above described oxidation catalyst device for exhaust gas purification makes the exhaust gas of the internal combustion engine which flows in from the above described exhaust-gas inflow part pass through the above described outflow cell through the above described cell partition wall. At this time, the oxidation catalyst device can make the particulates in the above described exhaust gas oxidized and combusted by the above described oxidation catalyst, and make the purified exhaust gas flow out from the above described exhaust-gas outflow part.

In the above described oxidation catalyst device for exhaust gas purification, a perovskite-type composite metal oxide represented by the chemical formula of AMO₃ can be used as the above described oxidation catalyst. (See Patent Literature 1, for instance.) In the above described site A, one or more metals such as La, Y, Dy and Nd, and one or more metals such as Sr, Ba and Mg enter. In the above described site M, one or more metals such as Mn, Fe and Co enter. The above described oxidation catalyst specifically includes La_{1_x}SrₓFeO₃ (0.1 ≤ x ≤ 0.65) and La₁₋ₓBaₓFeO₃ (0.1 ≤ x ≤ 0.65).

A perovskite-type composite metal oxide represented by the chemical formula of AB₁₋ₓCₓO₃ is also known as the oxidation catalyst which is used in the above described oxidation catalyst device for exhaust gas purification, for instance. (See Patent Literature 2, for instance.) The above described A is at least one metal selected from the group consisting of La, Sr, Ce, Ba and Ca. The above described B is at least one metal selected from the group consisting of Co, Fe, Ni, Cr, Mn and Mg. The above described C is Pt or Pd.

A perovskite-type composite metal oxide represented by the chemical formula of CeₓM₁₋ₓZrO₃ is also known as the above described oxidation catalyst, for instance. (See Patent Literature 3, for instance.) The above described M is at least one metal selected from the group consisting of La, Sm, Nd, Gd, Sc and Y, and x satisfies 0.001 ≤ x ≤ 0.2.

However, in the above described oxidation catalyst, the above described conventional perovskite-type composite metal oxide has such inconveniences that an oxidation temperature for the particulates and hydrocarbons having high boiling points is high and besides sufficient catalytic activity cannot be obtained.

In addition, a perovskite-type composite metal oxide represented by the chemical formula of Y₁₋ₓAgₓ(Mn_{1-y}A_{y}O₃ is proposed as the above described oxidation catalyst by the present inventors. (See Patent Literature 4, for instance.) The above described A is one metal selected from the group consisting of Ti, Nb, Ta and Ru, and x and y satisfy 0.01 ≤ x ≤ 0.15 and 0.005 ≤ y ≤ 0.2, respectively.

The above described oxidation catalyst device for exhaust gas purification including an oxidation catalyst formed from the above described perovskite-type composite metal oxide represented by the chemical formula of Y₁₋ₓAgₓMn_{1-y}A_{y}O₃ can lower the combustion temperature of the above described particulates. However, an oxidation catalyst device for exhaust gas purification which can further lower the combustion temperature of the particulates, and can combust the particulates in a short period of time is desired.

### Citation list

### Patent Literature

[Patent Literature 1]: Japanese Patent Laid-Open No. 2007-237012
[Patent Literature 2]: Japanese Patent Laid-Open No. 7-116519
[Patent Literature 3]: Japanese Patent Laid-Open No. 2003-334443
[Patent Literature 4]: Japanese Patent Laid-Open No. 2008-100184

### Summary of Invention

### Technical Problem

The present invention is designed with respect to the above described circumstance, and the object is to provide an oxidation catalyst which can show excellent catalytic activity at a lower temperature against contents such as particulates and hydrocarbons having high boiling points in an exhaust gas of an internal combustion engine. Furthermore, another object of the present invention is to provide an oxidation catalyst device for exhaust gas purification, which can oxidize and combust the above described particulates at a lower temperature and in a shorter period of time.

### Solution to Problem

In order to achieve such objects, the oxidation catalyst according to the present invention, which oxidizes contents in an exhaust gas of an internal combustion engine to purify the gas, comprises a mixture of: any one composite metal oxide represented by chemical formula of YMnO₃, Y₁₋ₓAgₓ MnO₃ (0.01 ≤ x ≤ 0.30) and Y₁₋ₓAgₓMn_{1-y}A_{y}O₃ (0.01 ≤ x 0.30, 0.005 ≤ y ≤ 0.30, and A is one metal selected from the group consisting of Ti, Ce and Ru); and zirconium oxide.

The oxidation catalyst according to the present invention can employ the above described composite metal oxide represented by the chemical formula of YMnO₃.

The oxidation catalyst according to the present invention also may employ the above described composite metal oxide represented by the chemical formula of Y₁₋ₓAgₓMnO₃ in which x satisfies 0.01 ≤ x ≤ 0.30. The above described composite metal oxide represented by the above described chemical formula of Y₁₋ₓAgₓMnO₃ is a composite metal oxide in which one part of Y of a first metal in the above described composite metal oxide represented by the above described chemical formula of YMnO₃ is replaced with Ag of a third metal. By this replacement, Y₁₋ₓAgₓMnO₃ can have higher catalytic activity than YMnO₃.

When the x is less than 0.01 in the above described composite metal oxide represented by the chemical formula of Y₁₋ₓAgₓMnO₃, the composite metal oxide shows an insufficient effect of enhancing catalytic activity, and when the x exceeds 0.30, the heat resistance of the oxidation catalyst decreases and sufficient performance cannot be obtained.

Furthermore, the oxidation catalyst according to the present invention may employ the above described composite metal oxide represented by the chemical formula of Y₁₋ₓAgₓMn_{1-y}A_{y}O₃. Here, A is one metal selected from the group consisting of Ti, Ce and Ru, and x and y satisfy 0.01 ≤ x ≤ 0.30 and 0.005 ≤ y ≤ 0.30, respectively.

The above described composite metal oxide represented by the above described chemical formula of Y₁₋ₓAgₓMn_{1-y}A_{y}O₃ is a composite metal oxide in which one part of Mn of a second metal in the above described composite metal oxide represented by the above described chemical formula of Y₁₋ₓAgₓMnO₃ is replaced with A of a fourth metal. The above described A is any one metal out of Ti, Ce and Ru.

When the x is less than 0.01 in the above described composite metal oxide represented by the above described chemical formula of Y₁₋ₓAgₓMn_{1-y}A_{y}O₃, the composite metal oxide shows an insufficient effect of enhancing catalytic activity, and when the x exceeds 0.30, the heat resistance of the oxidation catalyst decreases and sufficient performance cannot be occasionally obtained. In addition, when the y is less than 0.005, the composite metal oxide shows an insufficient effect of enhancing catalytic activity, and when the y exceeds 0.30, the heat resistance of the oxidation catalyst decreases and sufficient performance cannot be obtained.

The above described oxidation catalyst according to the present invention contains the above described zirconium oxide and accordingly can oxidize, combust and remove contents such as particulates and hydrocarbons having high boiling points included in an exhaust gas of an internal combustion engine at a low temperature, compared to the above described oxidation catalyst which is formed of only the composite metal oxide.

The above described oxidation catalyst according to the present invention preferably contains zirconium oxide in the range of 5 to 20 mass% with respect to the above described composite metal oxide. When the content of the above described zirconium oxide is less than 5 mass%, the oxidizing temperature for the content in the exhaust gas of the internal combustion engine cannot be occasionally sufficiently lowered, and even when the content of the zirconium oxide exceeds 20 mass%, an effect equal to or better than the effect by the 20 mass% content cannot be occasionally obtained.

In addition, when the A is Ti in the oxidation catalyst according to the present invention including a mixture of the above described composite metal oxide represented by the chemical formula of Y₁₋ₓAgₓMn_{1-y}A_{y}O₃ and the above described zirconium oxide, the oxidation catalyst can be particularly preferably used for an oxidation catalyst device for exhaust gas purification.

In order to achieve the above described object, the oxidation catalyst device for exhaust gas purification according to the present invention has a porous filter substrate having a wall flow structure in which one end is an exhaust-gas inflow part, and the other end is an exhaust-gas outflow part, and an oxidation catalyst which is carried on the porous filter substrate, wherein the porous filter substrate comprises: a plurality of inflow cells in which the exhaust-gas inflow parts out of a plurality of through holes that are formed so as to penetrate in the axial direction are opened, while the exhaust-gas outflow parts are blocked; a plurality of outflow cells in which the exhaust-gas inflow parts of the plurality of through holes are blocked, while the exhaust-gas outflow parts are opened; and a cell partition wall which separates the inflow cells and the outflow cells, and the oxidation catalyst comprises: a first catalyst layer which is carried on a surface at least on the inflow cell side of the cell partition wall; and a second catalyst layer which is carried on the surface of the wall face of a pore of the porous filter substrate which forms the cell partition wall, and makes the particulates in the exhaust gas oxidized by the above described oxidation catalyst while making an exhaust gas of an internal combustion engine which flows in from the exhaust-gas inflow part pass through the cell partition wall into the outflow cells, and the purified exhaust gas flow out from the exhaust-gas outflow part, wherein the oxidation catalyst is formed of a porous body of a mixture of: a composite metal oxide which is represented by the chemical formula of Y₁₋ₓAgₓ(Mn_{1-y}Ti_{y}O₃ in which x and y satisfy 0.01 ≤ x ≤ 0.30 and 0.005 ≤ y ≤ 0.30, respectively; and zirconium oxide.

In the oxidation catalyst device for exhaust gas purification according to the present invention, the oxidation catalyst which forms the above described first catalyst layer and the above described second catalyst layer is the porous body of the mixture of the composite metal oxide and the zirconium oxide. In addition, the above described composite metal oxide is the composite metal oxide represented by the chemical formula of Y₁₋ₓAgₓMn_{1-y}Ti_{y}O₃ (0.01 ≤ x ≤ 0.30 and 0.005 ≤ y ≤ 0.30). Thereby, the oxidation catalyst device for exhaust gas purification according to the present invention can combust the particulates in the exhaust gas of an internal combustion engine at a lower temperature and in a shorter period of time.

When the x is less than 0.01 in the above described composite metal oxide represented by the above described chemical formula of Y₁₋ₓAgₓMn_{1-y}A_{y}O₃, the composite metal oxide shows an insufficient effect of enhancing catalytic activity, and when the x exceeds 0.30, the heat resistance of the oxidation catalyst decreases and sufficient performance cannot be obtained. In addition, when the y is less than 0.005, the composite metal oxide shows an insufficient effect of enhancing catalytic activity, and when the y exceeds 0.30, the heat resistance of the oxidation catalyst decreases and sufficient performance cannot be obtained.

In the oxidation catalyst device for exhaust gas purification according to the present invention, each of the above described catalyst layers is formed of a porous body having pores with diameters in the range of 0.01 to 3.0 µm, and the total porosity of the above described porous filter substrate and each of the catalyst layers is preferably in the range of 30 to 55% by volume. In addition, the total porosity of the above described porous filter substrate and each of the catalyst layers is particularly preferably in the range of 35 to 51% by volume.

In the oxidation catalyst device for exhaust gas purification according to the present invention, the diameters of the pores in the above described porous body which forms each of the above described catalyst layers is in the above described range, and the total porosity of the above described porous filter substrate and each of the catalyst layers is in the above described range. Thereby, the combustion temperature of the above described particulates can be sufficiently lowered.

When the diameter of the pore of the above described porous body which forms each of the above described catalyst layers is less than 0.01 µm in the oxidation catalyst device for exhaust gas purification according to the present invention, the pressure loss occasionally increases. On the other hand, when the diameter of the above described pore in each of the above described catalyst layers exceeds 3.0 µm, the above described particulates in the above described exhaust gas cannot sufficiently come in contact with the surface of the pore, and an effect of lowering the combustion temperature of the particulates may not be sufficiently obtained.

In addition, when the total porosity of the above described porous filter substrate and each of the above described catalyst layers is less than 30% by volume in the oxidation catalyst device for exhaust gas purification according to the present invention, the pressure loss may increase when the above described exhaust gas passes through the above described pore. On the other hand, when the total porosity of the above described porous filter substrate and each of the above described catalyst layers exceeds 55% by volume, the probability of the contact of the above described exhaust gas with the catalyst layer decreases, and the effect of lowering the combustion temperature of the particulates may not be sufficiently obtained.

### Brief Description of Drawings

[Figure 1] Figure 1 is an explanatory drawing of an oxidation catalyst device for exhaust gas purification in the present invention, Figure 1(a) is an explanatory sectional view, and Figure 1(b) is an enlarged schematic view of the part A in Figure 1(a).
[Figure 2] Figure 2 is a graph showing effects of oxidation catalysts for exhaust gas purification in the present embodiment.
[Figure 3] Figure 3 is a graph showing an effect of the oxidation catalysts for exhaust gas purification in the present embodiment.
[Figure 4] Figure 4 is a graph showing an effect of the oxidation catalysts for exhaust gas purification in the present embodiment.
[Figure 5] Figure 5 is a graph showing CO₂ concentration in the exhausted gas from an oxidation catalyst device for exhaust gas purification of Example 24.
[Figure 6] Figure 6 is a graph showing the diameters of pores in a porous filter substrate and each catalyst layer in the oxidation catalyst device for exhaust gas purification of Example 24.
[Figure 7] Figure 7 is a graph showing the total porosity of the porous filter substrate and each catalyst layer in the oxidation catalyst device for exhaust gas purification of Example 24.
[Figure 8] Figure 8 is a cross sectional image of a cell partition wall in the oxidation catalyst device for exhaust gas purification of Example 24, Figure 8(a) is a cross sectional image with the magnification of 50 times, and Figure 8(b) is a cross sectional image which enlargingly illustrates the part A in Figure 8(a) with the magnification of 500 times.
[Figure 9] Figure 9 is an explanatory drawing illustrating a catalyst evaluation instrument which is used for a catalyst performance evaluation test.
[Figure 10] Figure 10 is a graph showing a particulate-combusting period of time in oxidation catalyst devices for exhaust gas purification of Examples 25 to 29, respectively.
[Figure 11] Figure 11 is a graph showing the diameters of pores in a porous filter substrate and each catalyst layer in an oxidation catalyst device for exhaust gas purification of Example 25.
[Figure 12] Figure 12 is a graph showing the total porosity of the porous filter substrate and each of the total catalyst layers in oxidation catalyst devices for exhaust gas purification of Examples 25 to 29, respectively.
[Figure 13] Figure 13 is a graph showing the diameters of pores in a porous filter substrate and each catalyst layer in an oxidation catalyst device for exhaust gas purification of Example 26.
[Figure 14] Figure 14 is a graph showing the diameters of pores in a porous filter substrate and each catalyst layer in an oxidation catalyst device for exhaust gas purification of Example 27.
[Figure 15] Figure 15 is a graph showing the diameters of pores in a porous filter substrate and each catalyst layer in an oxidation catalyst device for exhaust gas purification of Example 28.
[Figure 16] Figure 16 is a graph showing the diameters of pores in a porous filter substrate and each catalyst layer in an oxidation catalyst device for exhaust gas purification of Example 29.
[Figure 17] Figure 17 is a graph showing a particulate-combusting period of time in oxidation catalyst devices for exhaust gas purification of Examples 30 to 33, respectively.
[Figure 18] Figure 18 is a graph showing the diameters of pores in a porous filter substrate and each catalyst layer in an oxidation catalyst device for exhaust gas purification of Example 30.
[Figure 19] Figure 19 is a graph showing the total porosity of the porous filter substrate and each of the total catalyst layers in the oxidation catalyst devices for exhaust gas purification of Examples 30 to 33, respectively.
[Figure 20] Figure 20 is a graph showing the diameters of pores in a porous filter substrate and each catalyst layer in the oxidation catalyst device for exhaust gas purification of Example 31.
[Figure 21] Figure 21 is a graph showing the diameters of pores in a porous filter substrate and each catalyst layer in the oxidation catalyst device for exhaust gas purification of Example 32.
[Figure 22] Figure 22 is a graph showing the diameters of pores in a porous filter substrate and each catalyst layer in the oxidation catalyst device for exhaust gas purification of Example 33.

### Description of Embodiments

Next, the oxidation catalysts in embodiments according to the present invention will be described in more detail below with reference to the attached drawings. The oxidation catalyst of the first aspect in the present embodiment is formed of a mixture of: a composite metal oxide represented by the chemical formula of YMnO₃; and zirconium oxide in the range of 5 to 20 mass% with respect to the composite metal oxide.

Next, the oxidation catalyst of the second aspect in the present embodiment is formed of a mixture of: a composite metal oxide which is represented by the chemical formula of Y₁₋ₓAgₓMnO₃ in which x satisfies 0.01 ≤ x ≤ 0.30; and zirconium oxide in the range of 5 to 20 mass% with respect to the composite metal oxide. The above described composite metal oxide represented by the above described chemical formula of Y₁₋ₓAgₓMnO₃ is a composite metal oxide in which one part of Y of a first metal in the above described composite metal oxide represented by the above described chemical formula of YMnO₃ is replaced with Ag of a third metal.

By replacing one part of Y with +3 valence with Ag with +1 valence, one part of Mn of a second metal is changed to +4 valence with higher oxygen activation from +3 valence in the above described replacement, so as to keep electroneutrality in a crystalline lattice. Furthermore, oxygen deficiency occurs in the crystalline lattice, the replacement reaction between the oxygen on the surface of the crystalline lattice and the oxygen in the atmosphere is activated, and the oxygen on the surface of the crystalline lattice tends to easily dissociate. From the above description, the composite metal oxide represented by the chemical formula of Y₁₋ₓAgₓMnO₃ can have higher catalytic activity than the composite metal oxide represented by the chemical formula of YMnO₃.

At this time, when the x is less than 0.01 in the above described composite metal oxide represented by the above described chemical formula of Y₁₋ₓAgₓMnO₃, the composite metal oxide shows an insufficient effect of enhancing catalytic activity, and when the x exceeds 0.30, the heat resistance of the oxidation catalyst decreases and sufficient performance cannot be obtained.

Next, the oxidation catalyst of the third aspect in the present embodiment is formed of a mixture of: a composite metal oxide represented by the chemical formula of Y₁₋ₓAgₓMn_{1-y}A_{y}O₃; and zirconium oxide in the range of 5 to 20 mass% with respect to the composite metal oxide. Here, A is one metal selected from the group consisting of Ti, Ce and Ru, and x and y satisfy 0.01 ≤ x ≤ 0.30 and 0.005 ≤ x ≤ 0.30, respectively.

The above described composite metal oxide represented by the above described chemical formula of Y₁₋ₓAgₓMn_{1-y}A_{y}O₃ is a composite metal oxide in which one part of Mn of the second metal in the above described composite metal oxide represented by the above described chemical formula of Y₁₋ₓAgₓMnO₃ is replaced with A of a fourth metal. The above described A is any one metal among Ti, Ce and Ru.

By replacing one part of Mn with +3 valence with any one of Ti with +4 valence, Ce with +4 valence and Ru with +4 valence in the above described replacement, distortion occurs in the crystalline lattice and a bonding energy of oxygen in the crystalline lattice decreases. From the above description, the composite metal oxide represented by the chemical formula of Y₁₋ₓAgₓMn_{1-y}A_{y}O₃ can have higher catalytic activity than the composite metal oxide represented by Y₁₋ₓAgₓMnO₃.

In the composite metal oxide represented by the chemical formula of Y₁₋ₓAgₓMn_{1-y}A_{y}O₃, the above described x and the above described y are set so as to balance positive and negative electric charges among respective constituent atoms. At this time, the reason of limiting the numeric value of x is the same in the case of the above described Y₁₋ₓAgₓMnO₃. In addition, when y is less than 0.005, the composite metal oxide shows an insufficient effect of causing distortion in the crystalline lattice and consequently shows an insufficient effect of enhancing catalytic activity, and when the y exceeds 0.30, the heat resistance of the oxidation catalyst decreases and sufficient performance cannot be obtained.

The oxidation catalysts in the first to third aspects contain the above described zirconium oxide and accordingly can oxidize, combust and remove contents such as particulates and hydrocarbons having high boiling points included in an exhaust gas of an internal combustion engine at a lower temperature, compared to an oxidation catalyst which does not contain zirconium oxide.

In addition, the oxidation catalysts in the first to third aspects preferably contain zirconium oxide in the range of 5 to 20 mass% with respect to the above described composite metal oxide. When the content of the above described zirconium oxide is less than 5 mass%, the oxidizing temperature for the content in the exhaust gas of the internal combustion engine cannot be occasionally sufficiently lowered, and even when the content of the zirconium oxide exceeds 20 mass%, an effect equal to or better than the effect by the 20 mass% content cannot be occasionally obtained.

In addition, when A is Ti in the oxidation catalyst of the third aspect, the oxidation catalyst can be particularly preferably used for an oxidation catalyst device for exhaust gas purification.

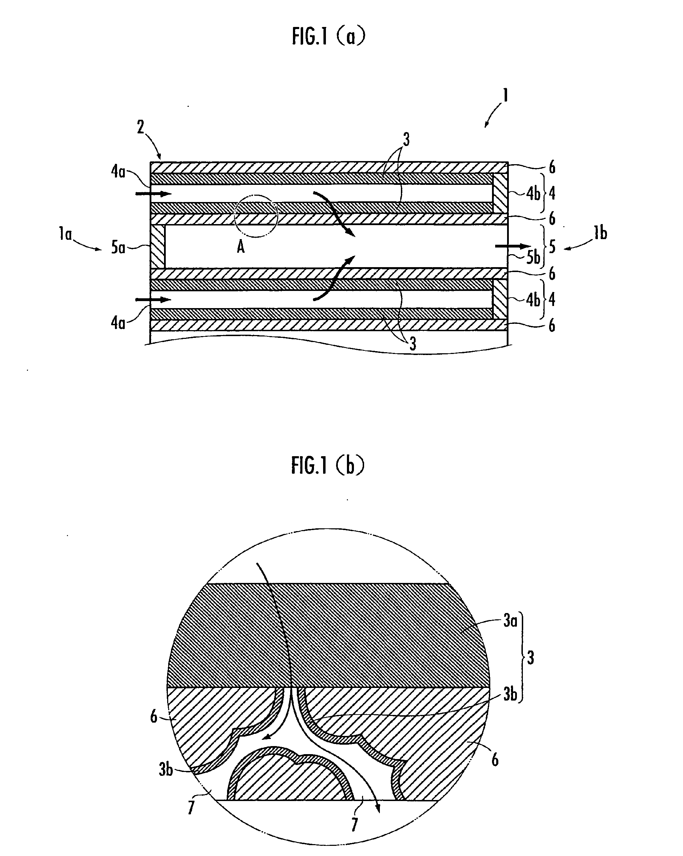

Next, the oxidation catalyst device for exhaust gas purification in an embodiment according to the present invention will be described in more detail below with reference to the attached drawings. As is illustrated in Figure 1(a), the oxidation catalyst device 1 for exhaust gas purification in the present embodiment includes a porous filter substrate 2 having a wall flow structure in which one end is an exhaust-gas inflow part 1 a and the other end is an exhaust-gas outflow part 1 b, and an oxidation catalyst which is carried on the porous filter substrate 2.

The porous filter substrate 2 is a porous body made from SiC, for instance, and has a plurality of pores with diameters in the range of 20 to 25 µm, and the porous filter substrate 2 itself has porosity in the range of 55 to 60% by volume. The porous filter substrate 2 has a rectangular shape, for instance, has a plurality of through holes which penetrate in the axial direction arranged so that the cross section forms a lattice shape, and has a plurality of inflow cells 4 and a plurality of outflow cells 5 which are formed of the through holes. In the inflow cell 4, an end 4a in the exhaust-gas inflow part 1 a side is opened, while an end 4b in the exhaust-gas outflow part 1b side is blocked. On the other hand, in the outflow cell 5, an end 5a in the exhaust-gas inflow part 1a side is blocked, while an end 5b in the exhaust-gas outflow part 1b side is opened. The inflow cell 4 and the outflow cell 5 are alternatively arranged so as to form a checkered lattice shape on the cross section, and are isolated from each other by a cell partition wall 6 which forms a boundary part between each of the cells 4 and 5.

The oxidation catalyst device 1 for exhaust gas purification has a first catalyst layer 3 a which is carried on a surface of the cell partition wall 6 in the inflow cell 4 side as is illustrated in Figure 1 (a), and a second catalyst layer 3b which is carried on the surface of a wall face of a pore 7 of the cell partition wall 6 as is illustrated in Figure 1(b), as an oxidation catalyst.

Each of the catalyst layers 3a and 3b is a porous body having pores (not shown) with diameters in the range of 0.01 to 3.0 µm. Each of the catalyst layers 3a and 3b is formed of a mixture of: a composite metal oxide represented by the chemical formula of Y₁₋ₓAgₓMn_{1-y}A_{y}O₃; and zirconium oxide. Here, x and y satisfy 0.01 ≤ x ≤ 0.30 and 0.005 ≤ y ≤ 0.30, respectively, and A is Ti.

In addition, the total porosity of both of the porous filter substrate 2 and each of the catalyst layers 3a and 3b is in the range of 30 to 55% by volume. For information, a restraining member made from a metal for restraining the outflow of the exhaust gas is provided in the perimeter of the cell partition wall 6 of the outermost layer, though the member is not shown in the figure.

In the oxidation catalyst device 1 for exhaust gas purification, the first catalyst layer 3a is carried only on the surface of the cell partition wall 6 in the inflow cell 4 side, but may be carried on both of the surface in the inflow cell 4 side and the surface in the outflow cell 5 side. In addition, the porous filter substrate 2 employs a porous body made from SiC, but may employ a porous body made from Si-SiC.

Next, the operation of the oxidation catalyst device 1 for exhaust gas purification in the present embodiment will be described below with reference to Figure 1. Firstly, the oxidation catalyst device 1 for exhaust gas purification is installed so that the exhaust-gas inflow part 1a is positioned in the upstream side in a flow channel of an exhaust gas of an internal combustion engine. By installing the device in this way, the above described exhaust gas is introduced into the inflow cell 4 from the end 4a, as is shown by the arrow of Figure 1(a), because the end 5a of the outflow cell 5 is blocked.

At this time, because the end in the exhaust-gas outflow part 1b side is blocked in the inflow cell 4, the above described exhaust gas which has been introduced into the inflow cell 4 passes into the outflow cell 5 through pores 7 in a cell partition wall 6. Then, the particulates in the above described exhaust gas come in contact with the first catalyst layer 3a which is carried on the surface of the cell partition wall 6, and the second catalyst layer 3b which is carried on the surface of the wall faces of the pores 7 while passing therethrough, and are oxidized, combusted and removed by the operation of the catalyst in each of the catalyst layers 3a and 3b.

As a result of this, the above described exhaust gas in which the above described particulates have been combusted and removed is exhausted to the outside from the end 5b in the exhaust-gas outflow part 1b side of the outflow cell 5.

In the oxidation catalyst device 1 for exhaust gas purification in the present embodiment, the catalyst which forms the first catalyst layer 3a and the second catalyst layer 3b is a porous body of a mixture of a composite metal oxide and zirconium oxide.

In addition, the above described composite metal oxide is a composite metal oxide represented by the general formula of Y₁₋ₓAgₓMn_{1-y}Ti_{y}O₃ (0.01 ≤ x ≤ 0.30 and 0.005 ≤ y ≤ 0.30). Thereby, the oxidation catalyst device 1 for exhaust gas purification in the present embodiment can oxidize, combust and purify particulates in the exhaust gas of an internal combustion engine at a yet lower temperature and in a shorter period of time.

In addition, in the oxidation catalyst device 1 for exhaust gas purification in the present embodiment, the first catalyst layer 3 a and the second catalyst layer 3b are formed of a porous body, and have the pores 7 with diameters in the range of 0.01 to 3.0 µm. In addition, the whole of the porous filter substrate 2 combined with each of the catalyst layers 3a and 3b has porosity in the range of 30 to 55% by volume. Thereby, the probability of the contact of the particulates in the above described exhaust gas with the catalyst layers 3a and 3b can be enhanced. Accordingly, the oxidation catalyst device 1 for exhaust gas purification in the present embodiment can oxidize, combust and purify the particulates in the exhaust gas of an internal combustion engine at a lower temperature, compared to an oxidation catalyst device for exhaust gas purification according to a prior art.

Next, Examples and Comparative Examples according to the present invention will be shown below.

### Example 1

In the present Example, firstly, a mixture was prepared by blending yttrium nitrate pentahydrate, manganese nitrate hexahydrate, citric acid and water in a molar ratio of 1 : 1:3:40, the blend was mixed and pulverized in a mortar at the temperature of 50°C for 15 minutes, and then, the powder was subjected to the primary baking of holding the powder at the temperature of 400°C for 1 hour. Subsequently, a water-dispersed zirconia sol was blended with the resultant substance which was obtained in the above described primary baking so that the content of a zirconium oxide powder shares 5 mass%, the blend was mixed and pulverized in a mortar for 15 minutes, and then, the powder was subjected to the secondary baking of holding the powder at the temperature of 800°C for 3 hours. The above described water-dispersed zirconia sol is a sol which is formed by dispersing the zirconium oxide powder into water. From the above description, an oxidation catalyst powder was obtained which was formed of a mixture containing the composite metal oxide represented by the chemical formula of YMnO₃, and 5 mass% of zirconium oxide with respect to the composite metal oxide.

As for the above described water-dispersed zirconia sol which was used for the above described binder, one part of yttrium in the composite metal oxide YMnO₃ dissolves in the zirconium oxide in the above described secondary baking. It is considered that as a result of this, the above described composite metal oxide is converted into a cubic yttrium-stabilized zirconia having high oxygen-ion conductivity from a monoclinic zirconium oxide, which develops the oxidation activity.

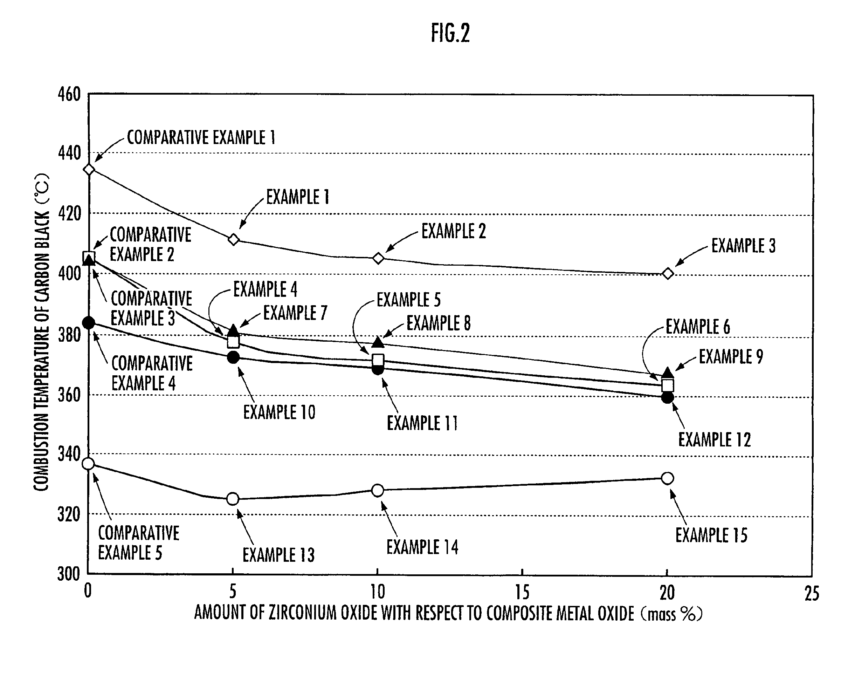

Next, a differential thermal analysis (DTA) was conducted for evaluating the activity of an oxidation catalyst powder which was obtained in the present Example. For the above described differential thermal analysis, firstly, a mixture was obtained by mixing 2.5 mg of carbon black with 50 mg of an oxidation catalyst powder which was obtained in the present Example as a catalyst for exhaust gas purification. Subsequently, the above described mixture was heated at a heating temperature of 10°C /minute in an air-flow atmosphere of 100 ml/minute, and heat flow (Heat Flow) with respect to the temperature was measured. Then, a combustion temperature of carbon black was determined from a peak of measured heat generation. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°. For information, the above described zirconium oxide is a cubic yttrium-stabilized zirconia formed by the dissolution of one part of yttrium in the composite metal oxide YMnO₃ into the zirconium oxide.

### Example 2

In the present Example, an oxidation catalyst powder was obtained in the completely same manner as in Example 1, except that the content of the zirconium oxide powder was set at 10 mass% with respect to the resultant substance which was obtained in the above described primary baking. As a result of this, the oxidation catalyst powder was obtained which was formed of a mixture containing a composite metal oxide represented by the chemical formula of YMnO₃, and 10 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 3

In the present Example, an oxidation catalyst powder was obtained in the completely same manner as in Example 1, except that the content of the zirconium oxide powder was set at 20 mass% with respect to the resultant substance which was obtained in the above described primary baking. As a result of this, the oxidation catalyst powder was obtained which was formed of a mixture containing a composite metal oxide represented by the chemical formula of YMnO₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### [Comparative Example 1]

In the present Comparative Example, an oxidation catalyst powder was obtained in the completely same manner as in Example 1, except that the resultant substance which was obtained in the above described primary baking was mixed and pulverized in a mortar for 15 minutes without any addition of the zirconium oxide powder into the resultant substance, and then, the powder was subjected to the secondary baking of holding the powder at the temperature of 800°C for 3 hours. As a result of this, the oxidation catalyst powder was obtained which was formed of the composite metal oxide represented by the chemical formula of YMnO₃.

Next, the combustion temperature of carbon black was determined in the completely same manner as in Example 1, except that the oxidation catalyst powder which was obtained in the present Comparative Example was used as the oxidation catalyst for exhaust gas purification. The result is shown in Figure 2.

Next, the component in the oxidation catalyst powder which was obtained in the present Comparative Example was evaluated with an X-ray diffraction analysis. According to the result of the X-ray diffraction analysis, it is obvious that the oxidation catalyst powder does not have the crystal peak originating in zirconium oxide though having a crystal peak originating in the composite metal oxide YMnO₃.

### Example 4

In the present Example, an oxidation catalyst powder was obtained in the completely same manner as in Example 1, except that yttrium nitrate pentahydrate, silver nitrate, manganese nitrate hexahydrate, citric acid and water were mixed in a molar ratio of 0.95 : 0.05 : 1 : 3 : 40. As a result of this, the oxidation catalyst powder was obtained which was formed of a mixture containing a composite metal oxide represented by the chemical formula of Y_{0.95}Ag_{0.05}MnO₃, and 5 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 5

In the present Example, an oxidation catalyst powder was obtained in the completely same manner as in Example 4, except that the content of the zirconium oxide powder was set at 10 mass% with respect to the resultant substance which was obtained in the above described primary baking. As a result of this, the oxidation catalyst powder was obtained which was formed of a mixture containing a composite metal oxide represented by the chemical formula of Y_{0.95}Ag_{0.05}MnO₃, and 10 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31 °.

### Example 6

In the present Example, an oxidation catalyst powder was obtained in the completely same manner as in Example 4, except that the content of the zirconium oxide powder was set at 20 mass% with respect to the resultant substance which was obtained in the above described primary baking. As a result of this, the oxidation catalyst powder was obtained which was formed of a mixture containing a composite metal oxide represented by the chemical formula of Y_{0.95}Ag_{0.05}MnO₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### [Comparative Example 2]

In the present Comparative Example, an oxidation catalyst powder was obtained in the completely same manner as in Example 4, except that the resultant substance which was obtained in the above described primary baking was mixed and pulverized in a mortar for 15 minutes without any addition of the zirconium oxide powder into the resultant substance, and then, the powder was subjected to the secondary baking of holding the powder at the temperature of 800°C for 3 hours. As a result of this, the oxidation catalyst powder was obtained which was formed of the composite metal oxide represented by the chemical formula of Y_{0.95}Ag_{0.05}MnO₃.

Subsequently, the combustion temperature of carbon black was determined in the completely same manner as in Example 1, except that the oxidation catalyst powder which was obtained in the present Comparative Example was used as the oxidation catalyst for exhaust gas purification. The result is shown in Figure 2.

Next, the component in the oxidation catalyst powder which was obtained in the present Comparative Example was evaluated with an X-ray diffraction analysis. According to the result of the X-ray diffraction analysis, it is obvious that the oxidation catalyst powder does not have the crystal peak originating in zirconium oxide though having a crystal peak originating in the composite metal oxide YMnO₃.

### Example 7

In the present Example, an oxidation catalyst powder was obtained in the completely same manner as in Example 1, except that yttrium nitrate pentahydrate, silver nitrate, manganese nitrate hexahydrate, anatase of titanium oxide, citric acid and water were mixed in a molar ratio of 0.95 : 0.05 : 0.95 : 0.05 : 3 : 40. As a result of this, the oxidation catalyst powder was obtained which was formed of a mixture containing a composite metal oxide represented by the chemical formula of Y_{0.95}Ag_{0.05}Mn_{0.95}Ti_{0.05}O₃, and 5 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 8

In the present Example, an oxidation catalyst powder was obtained in the completely same manner as in Example 7, except that the content of the zirconium oxide powder was set at 10 mass% with respect to the resultant substance which was obtained in the above described primary baking. As a result of this, the oxidation catalyst powder was obtained which was formed of a mixture containing the composite metal oxide represented by the chemical formula of Y_{0.95}Ag_{0.05}Mn_{0.95}Ti_{0.05}O₃, and 10 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 9

In the present Example, an oxidation catalyst powder was obtained in the completely same manner as in Example 7, except that the content of the zirconium oxide powder was set at 20 mass% with respect to the resultant substance which was obtained in the above described primary baking. As a result of this, the oxidation catalyst powder was obtained which was formed of a mixture containing the composite metal oxide represented by the chemical formula of Y_{0.95}Ag_{0.05}Mn₀.₉₅Ti_{0.05}O₃, and 20 mass% of zirconium oxide with respect to the composite metal oxide.

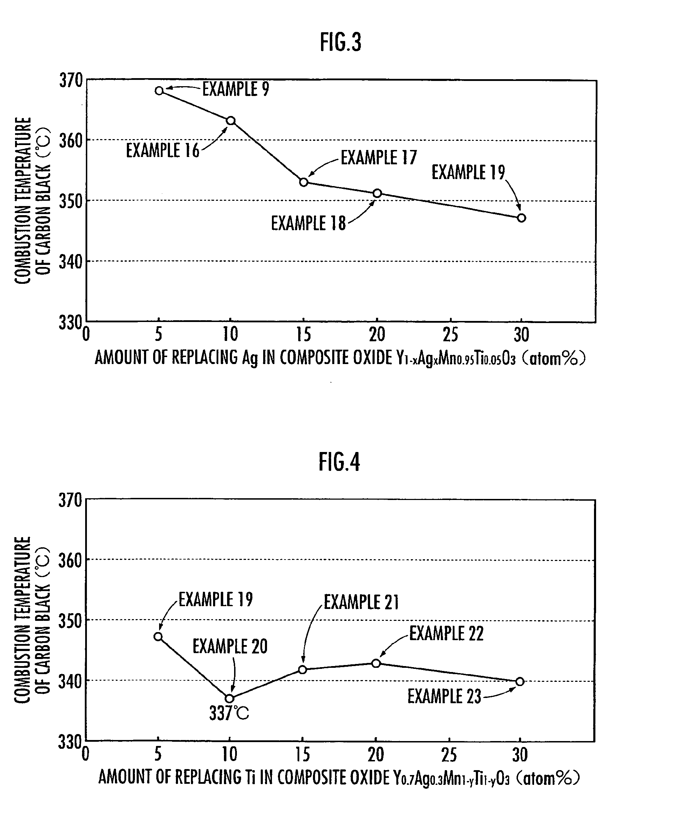

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2 and Figure 3.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃ and the crystal peak originating in zirconium oxide having a main peak in the vicinity of 2θ = 31°.

### [Comparative Example 3]

In the present Comparative Example, an oxidation catalyst powder was obtained in the completely same manner as in Example 7, except that the resultant substance which was obtained in the above described primary baking was mixed and pulverized in a mortar for 15 minutes without any addition of the zirconium oxide powder into the resultant substance, and then, the powder was subjected to the secondary baking of holding the powder at the temperature of 800°C for 3 hours. As a result of this, the oxidation catalyst powder was obtained which was formed of the composite metal oxide represented by the chemical formula of Y_{0.95}Ag_{0.05}Mn_{0.95}Ti_{0.05}O₃.

Subsequently, the combustion temperature of carbon black was determined in the completely same manner as in Example 1, except that the oxidation catalyst powder which was obtained in the present Comparative Example was used as the oxidation catalyst for exhaust gas purification. The result is shown in Figure 2.

Next, the component in the oxidation catalyst powder which was obtained in the present Comparative Example was evaluated with an X-ray diffraction analysis. According to the result of the X-ray diffraction analysis, it is obvious that the oxidation catalyst powder does not have the crystal peak originating in zirconium oxide though having a crystal peak originating in the composite metal oxide YMnO₃.

### Example 10

In the present Example, an oxidation catalyst powder was obtained in the completely same manner as in Example 1, except that yttrium nitrate pentahydrate, silver nitrate, manganese nitrate hexahydrate, cerium nitrate hexahydrate, citric acid and water were mixed in a molar ratio of 0.95 : 0.05 : 0.95 : 0.05 : 3 : 40. As a result of this, the oxidation catalyst powder was obtained which was formed of a mixture containing a composite metal oxide represented by the chemical formula of Y_{0.95}Ag_{0.05}Mn_{0.95}Ce_{0.05}O₃, and 5 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃ and the crystal peak originating in zirconium oxide having a main peak in the vicinity of 2θ = 31°.

### Example 11

In the present Example, an oxidation catalyst powder was obtained in the completely same manner as in Example 10, except that the content of the zirconium oxide powder was set at 10 mass% with respect to the resultant substance which was obtained in the above described primary baking. As a result of this, the oxidation catalyst powder was obtained which was formed of a mixture containing the composite metal oxide represented by the chemical formula of Y_{0.95}Ag_{0.05}Mn_{0.95}Ce_{0.05}O₃, and 10 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 12

In the present Example, an oxidation catalyst powder was obtained in the completely same manner as in Example 10, except that the content of the zirconium oxide powder was set at 20 mass% with respect to the resultant substance which was obtained in the above described primary baking. As a result of this, the oxidation catalyst powder was obtained which was formed of a mixture containing the composite metal oxide represented by the chemical formula of Y_{0.95}Ag_{0.05}Mn_{0.95}Ce_{0.05}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### [Comparative Example 4]

In the present Comparative Example, an oxidation catalyst powder was obtained in the completely same manner as in Example 10, except that the resultant substance which was obtained in the above described primary baking was mixed and pulverized in a mortar for 15 minutes without any addition of the zirconium oxide powder into the resultant substance, and then, the powder was subjected to the secondary baking of holding the powder at the temperature of 800°C for 3 hours. As a result of this, the oxidation catalyst powder was obtained which was formed of the composite metal oxide represented by the chemical formula of Y_{0.95}Ag_{0.05}Mn_{0.95}Ce_{0.05}O₃.

Next, the combustion temperature of carbon black was determined in the completely same manner as in Example 1, except that the oxidation catalyst powder which was obtained in the present Comparative Example was used as the oxidation catalyst for exhaust gas purification. The result is shown in Figure 2.

Next, the component in the oxidation catalyst powder which was obtained in the present Comparative Example was evaluated with an X-ray diffraction analysis. According to the result of the X-ray diffraction analysis, it is obvious that the oxidation catalyst powder does not have the crystal peak originating in zirconium oxide though having a crystal peak originating in the composite metal oxide YMnO₃.

### Example 13

In the present Example, an oxidation catalyst powder was obtained in the completely same manner as in Example 1, except that yttrium nitrate pentahydrate, silver nitrate, manganese nitrate hexahydrate, an aqueous solution of ruthenium nitrate, citric acid and water were mixed in a molar ratio of 0.95 : 0.05 : 0.95 : 0.05 : 3 : 40. As a result of this, the oxidation catalyst powder was obtained which was formed of a mixture containing a composite metal oxide represented by the chemical formula of Y_{0.95}Ag_{0.05}Mn_{0.95}Ru_{0.05}O₃, and 5 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 14

In the present Example, an oxidation catalyst powder was obtained in the completely same manner as in Example 13, except that the content of the zirconium oxide powder was set at 10 mass% with respect to the resultant substance which was obtained in the above described primary baking. As a result of this, the oxidation catalyst powder was obtained which was formed of a mixture containing the composite metal oxide represented by the chemical formula of Y_{0.95}Ag_{0.05}Mn_{0.95}Ru_{0.05}O₃, and 10 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 15

In the present Example, an oxidation catalyst powder was obtained in the completely same manner as in Example 13, except that the content of the zirconium oxide powder was set at 20 mass% with respect to the resultant substance which was obtained in the above described primary baking. As a result of this, the oxidation catalyst powder was obtained which was formed of a mixture containing the composite metal oxide represented by the chemical formula of Y_{0.95}Ag_{0.05}Mn_{0.95}Ru_{0.05}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 2.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31 °.

### [Comparative Example 5]

In the present Comparative Example, an oxidation catalyst powder was obtained in the completely same manner as in Example 13, except that the resultant substance which was obtained in the above described primary baking was mixed and pulverized in a mortar for 15 minutes without any addition of the zirconium oxide powder into the resultant substance, and then, the powder was subjected to the secondary baking of holding the powder at the temperature of 800°C for 3 hours. As a result of this, the oxidation catalyst powder was obtained which was formed of the composite metal oxide represented by the chemical formula of Y_{0.95}Ag_{0.05}Mn_{0.95}Ru_{0.05}O₃.

Subsequently, the combustion temperature of carbon black was determined in the completely same manner as in Example 1, except that the oxidation catalyst powder which was obtained in the present Comparative Example was used as the oxidation catalyst for exhaust gas purification. The result is shown in Figure 2.

Next, the component in the oxidation catalyst powder which was obtained in the present Comparative Example was evaluated with an X-ray diffraction analysis. According to the result of the X-ray diffraction analysis, it is obvious that the oxidation catalyst powder does not have the crystal peak originating in zirconium oxide though having a crystal peak originating in the composite metal oxide YMnO₃.

From Figure 2, it is obvious that the catalysts for exhaust gas purification in Examples 1 to 3, which are formed of a mixture of the composite metal oxide YMnO₃ and zirconium oxide, can oxidize (combust) the above described carbon black at a lower temperature, compared to the oxidation catalyst for exhaust gas purification in Comparative Example 1 which is formed of only the above described composite metal oxide.

From Figure 2, it is also obvious that the oxidation catalysts for exhaust gas purification in Examples 4 to 6, which are formed of a mixture of the composite metal oxide Y_{0.95}Ag_{0.05}MnO₃ and zirconium oxide, can oxidize (combust) the above described carbon black at a lower temperature, compared to the oxidation catalyst for exhaust gas purification in Comparative Example 2 which is formed of only the above described composite metal oxide.

From Figure 2, it is also obvious that the oxidation catalysts for exhaust gas purification in Examples 7 to 9, which are formed of a mixture of the composite metal oxide Y_{0.95}Ag_{0.05}Mn_{0.95}Ti_{0.05}O₃ and zirconium oxide, can oxidize (combust) the above described carbon black at a lower temperature, compared to the oxidation catalyst for exhaust gas purification in Comparative Example 3 which is formed of only the above described composite metal oxide.

From Figure 2, it is also obvious that the oxidation catalysts for exhaust gas purification in Examples 10 to 12, which are formed of a mixture of the composite metal oxide Y_{0.95}Ag_{0.05}Mn_{0.95}Ce_{0.05}O₃ and zirconium oxide, can oxidize (combust) the above described carbon black at a lower temperature, compared to the oxidation catalyst for exhaust gas purification in Comparative Example 4 which is formed of only the above described composite metal oxide.

From Figure 2, it is also obvious that the oxidation catalysts for exhaust gas purification in Examples 13 to 15, which are formed of a mixture of the composite metal oxide Y_{0.95}Ag_{0.05}Mn_{0.95}Ru_{0.05}O₃ and zirconium oxide, can oxidize (combust) the above described carbon black at a lower temperature, compared to the oxidation catalyst for exhaust gas purification in Comparative Example 5 which is formed of only the above described composite metal oxide.

### Example 16

In the present Example, firstly, an oxidation catalyst powder was obtained in the completely same manner as in Example 9, except that yttrium nitrate pentahydrate, silver nitrate, manganese nitrate hexahydrate, anatase of titanium oxide, citric acid and water were mixed in a molar ratio of 0.9 : 0.1 : 0.95 : 0.05 : 3 : 40. As a result of this, the oxidation catalyst powder was obtained which was formed of a mixture containing the composite metal oxide represented by the chemical formula of Y_{0.9}Ag_{0.1}Mn_{0.95}Ti_{0.05}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 3.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 17

In the present Example, an oxidation catalyst powder was obtained in the completely same manner as in Example 9, except that yttrium nitrate pentahydrate, silver nitrate, manganese nitrate hexahydrate, anatase of titanium oxide, citric acid and water were mixed in a molar ratio of 0.85 : 0.15 : 0.95 : 0.05 : 3 : 40. As a result of this, the oxidation catalyst powder was obtained which was formed of a mixture containing a composite metal oxide represented by the chemical formula of Y_{0.85}Ag_{0.15}Mn_{0.95}Ti_{0.05}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 3.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 18

In the present Example, an oxidation catalyst powder was obtained in the completely same manner as in Example 9, except that yttrium nitrate pentahydrate, silver nitrate, manganese nitrate hexahydrate, anatase of titanium oxide, citric acid and water were mixed in a molar ratio of 0.8 : 0.2 : 0.95 : 0.05 : 3 : 40. As a result of this, the oxidation catalyst powder was obtained which was formed of a mixture containing a composite metal oxide represented by the chemical formula of Y_{0.8}Ag_{0.2}Mn_{0.95}Ti_{0.05}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 3.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 19

In the present Example, an oxidation catalyst powder was obtained in the completely same manner as in Example 9, except that yttrium nitrate pentahydrate, silver nitrate, manganese nitrate hexahydrate, anatase of titanium oxide, citric acid and water were mixed in a molar ratio of 0.7 : 0.3 : 0.95 : 0.05 : 3 : 40. As a result of this, the oxidation catalyst powder was obtained which was formed of a mixture containing a composite metal oxide represented by the chemical formula of Y_{0.7}Ag_{0.3}Mn_{0.95}Ti_{0.05}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 3 and Figure 4.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°

From Figure 3, it is obvious that the oxidation catalysts for exhaust gas purification in Examples 9 and 16 to 19, of which the composite metal oxides are represented by chemical formulae of Y₁₋ₓAgₓMn_{0.95}Ti_{0.05}O₃ (x = 0.05 to 0.3), can oxidize (combust) the above described carbon black at a lower temperature, as x increases. It is also obvious that among the oxidation catalysts for exhaust gas purification in Examples 9 and 16 to 19, the oxidation catalyst for exhaust gas purification in Example 19, of which the composite metal oxide is represented by Y_{0.7}Ag_{0.3}Mn_{0.95}Ti_{0.05}O₃, can oxidize (combust) the above described carbon black at the lowest temperature.

### Example 20

In the present Example, an oxidation catalyst powder was obtained in the completely same manner as in Example 19, except that yttrium nitrate pentahydrate, silver nitrate, manganese nitrate hexahydrate, anatase of titanium oxide, citric acid and water were mixed in a molar ratio of 0.7 : 0.3 : 0.9 : 0.1 : 3 : 40. As a result of this, the oxidation catalyst powder was obtained which was formed of a mixture containing a composite metal oxide represented by the chemical formula of Y_{0.7}Ag_{0.3}Mn_{0.9}Ti_{0.1}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 4.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

### Example 21

In the present Example, an oxidation catalyst powder was obtained in the completely same manner as in Example 19, except that yttrium nitrate pentahydrate, silver nitrate, manganese nitrate hexahydrate, anatase of titanium oxide, citric acid and water were mixed in a molar ratio of 0.7 : 0.3 : 0.85 : 0.15 : 3 : 40. As a result of this, the oxidation catalyst powder was obtained which was formed of a mixture containing a composite metal oxide represented by the chemical formula of Y_{0.7}Ag_{0.3}Mn_{0.85}Ti_{0.15}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 4.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 20 = 31°.

### Example 22

In the present Example, an oxidation catalyst powder was obtained in the completely same manner as in Example 19, except that yttrium nitrate pentahydrate, silver nitrate, manganese nitrate hexahydrate, anatase of titanium oxide, citric acid and water were mixed in a molar ratio of 0.7 : 0.3 : 0.8 : 0.2 : 3 : 40. As a result of this, the oxidation catalyst powder was obtained which was formed of a mixture containing a composite metal oxide represented by the chemical formula of Y_{0.7}Ag_{0.3}Mn_{0.8}Ti_{0.2}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 4.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31 °.

### Example 23

In the present Example, an oxidation catalyst powder was obtained in the completely same manner as in Example 19, except that yttrium nitrate pentahydrate, silver nitrate, manganese nitrate hexahydrate, anatase of titanium oxide, citric acid and water were mixed in a molar ratio of 0.7 : 0.3 : 0.7 : 0.3 : 3 : 40. As a result of this, the oxidation catalyst powder was obtained which was formed of a mixture containing a composite metal oxide represented by the chemical formula of Y_{0.7}Ag_{0.3}Mn_{0.7}Ti_{0.3}O₃, and 20 mass% of zirconium oxide with respect to the composite metal oxide.

Subsequently, the combustion temperature of carbon black was determined in the completely same manner as in Example 1, except that the oxidation catalyst powder which was obtained in the present Example was used as the oxidation catalyst for exhaust gas purification. The result is shown in Figure 4.

Next, the component in the oxidation catalyst powder which was obtained in the present Example was evaluated with an X-ray diffraction analysis. According to the result of the X-ray diffraction analysis, it is obvious that the oxidation catalyst powder has a crystal peak originating in the composite metal oxide YMnO₃, and the crystal peak originating in zirconium oxide having a main peak in the vicinity of 2θ = 31°.

From Figure 4, it is obvious that among the oxidation catalysts for exhaust gas purification in Examples 19 to 23, the oxidation catalyst for exhaust gas purification in Example 20 can oxidize (combust) the above described carbon black at the lowest temperature.

### Example 24

In the present Example, firstly, a mixture was prepared by blending yttrium nitrate pentahydrate, silver nitrate, manganese nitrate hexahydrate, anatase of titanium oxide, citric acid and water in a molar ratio of 0.95 : 0.05 : 0.95 : 0.05 : 6 : 40, the blend was mixed and pulverized in a mortar at the temperature of 25°C for 15 minutes, and then, the powder was subjected to the primary baking of holding the powder at the temperature of 400°C for 1 hour. Subsequently, a blend was obtained by blending a water-dispersed zirconia sol which was formed by dispersing a zirconium oxide powder into water, with the resultant substance which was obtained in the above described primary baking so that the content of the zirconium oxide powder shared 10 mass%. In the above described water-dispersed zirconia sol, the content of the zirconium oxide powder is 20 mass%. A catalyst precursor slurry was prepared by mixing and pulverizing the above described blend in a mortar for 15 minutes, and then, mixing and pulverizing the resultant blend with a rotary ball mill at 100 revolutions per minute for 5 hours.

Subsequently, a porous filter substrate 2 (SiC porous body made by NGK Insulators, Ltd., and having trade name: MSC 14) was prepared in which a plurality of through holes that penetrated in the axial direction were arranged so that the cross section formed a lattice shape. The porous filter substrate 2 has a rectangular shape with the dimensions of 36×36×50 mm, and an apparent volume of 65,000 mm³, and the average diameter of the pores 7 is in the range of 20 to 25 µm.

Subsequently, an outflow cell 5 was formed by blocking respective one ends of the above described through holes in the porous filter substrate 2 alternately (specifically so as to form a checkered lattice shape on the cross section) with a ceramic adhesive of which the main component was silica. Subsequently, the slurry was passed into the plurality of the above described through holes of which the respective ends were not blocked ( which were specifically cells except the outflow cells 5), by passing the above described slurry into the porous filter substrate 2 from the side in which the above described respective ends were blocked. Subsequently, the excessive slurry was removed from the porous filter substrate 2 into which the slurry was passed.

Next, the porous filter substrate 2 on which the above described slurry deposited was subjected to the secondary baking of holding the powder at the temperature of 800°C for 1 hour. As a result of this, a first catalyst layer 3a was formed on the surfaces of cell partition walls 6 in the cells except the outflow cells 5, which were formed of a porous body of a mixture of: a composite metal oxide which was represented by the chemical formula of Y_{0.95}Ag_{0.05}Mn_{0.95}Ti_{0.05}O₃; and zirconium oxide. Furthermore, a second catalyst layer 3b was formed on the surfaces of the wall faces of the pores 7 of the cell partition walls 6 which were formed of a porous body of the above described mixture. The catalyst layers 3a and 3b are formed of a porous body having pores with diameters in the range of 0.01 to 3.0 µm through the above described secondary baking. The carried amount of the catalyst layers 3a and 3b by the porous filter substrate 2 is 80 g in total per L of the apparent volume of the porous filter substrate 2.

Subsequently, an oxidation catalyst device 1 for exhaust gas purification having a structure as illustrated in Figure 1 (a) was manufactured by blocking ends of the cells except the outflow cells 5, in the opposite side to the side in which the above described ends were blocked, with a ceramic adhesive of which the main component was silica, so as to form inflow cells 4. In the oxidation catalyst device 1 for exhaust gas purification, the whole of the porous filter substrate 2 combined with each of the catalyst layers 3a and 3b has porosity in the range of 30 to 55% by volume.

Next, a catalyst performance evaluation test was conducted for the oxidation catalyst device 1 for exhaust gas purification according to the present Example, in the following way. Firstly, the oxidation catalyst device 1 for exhaust gas purification was mounted on an exhaust system of a diesel engine which had 2.4 L of air volume displacement and was provided in an engine bench. Subsequently, the above described diesel engine was operated for 20 minutes to make the oxidation catalyst device 1 for exhaust gas purification collect 2g of particulates per L of the apparent volume of the oxidation catalyst device 1 for exhaust gas purification. The operating conditions of the above described diesel engine were 180°C of the inflow gas temperature into the oxidation catalyst device 1 for exhaust gas purification, 1,500 rpm of the engine revolution speed, and 70 N/m of the torque.

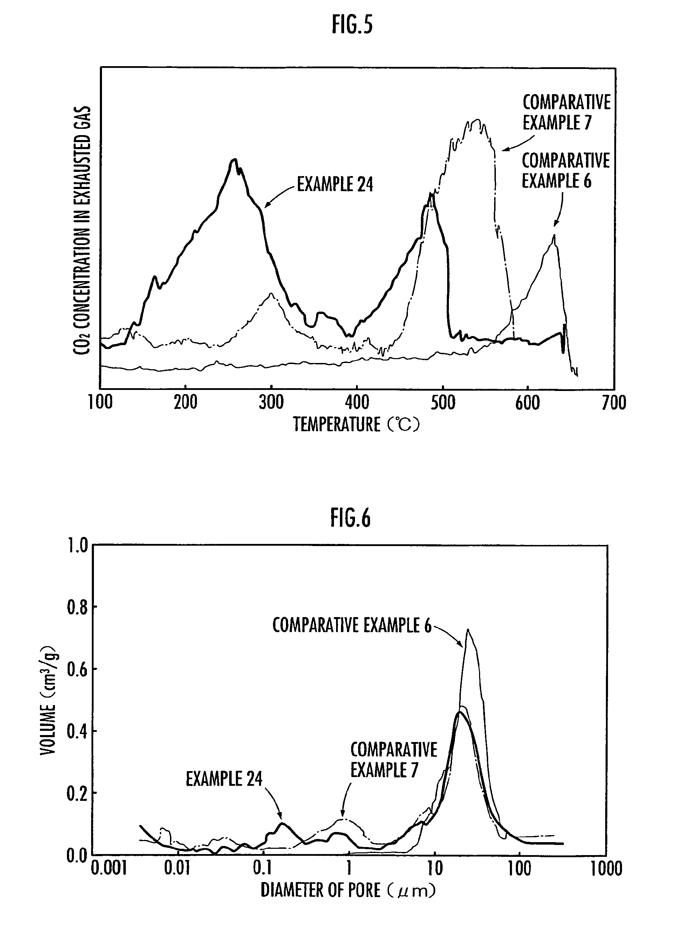

Subsequently, the oxidation catalyst device 1 for exhaust gas purification, which collected the particulates therein, was taken out from the above described exhaust system, and was fixed in a quartz tube of a circulation-type heating device. Subsequently, the oxidation catalyst device 1 for exhaust gas purification was heated while supplying an atmospheric gas formed of a mixture of oxygen and nitrogen from one end (supply port) of the above described quartz tube and discharging the resultant gas from the other end (discharge port) of the quartz tube. A volume ratio of oxygen and nitrogen in the above described atmospheric gas was 10 : 90 and the gas was supplied at a space velocity of 20,000 per hour. In addition, the oxidation catalyst device 1 for exhaust gas purification was heated in a tubular muffle furnace of the above described circulation-type heating device, and was heated to the temperature of 700°C from room temperature at 3°C per minute. At this time, the concentration of CO₂ in the exhaust gas exhausted from the above described quartz tube was measured with the use of a mass spectrometer. The result is shown in Figure 5. For information, the temperature corresponding to the peak of the concentration of CO₂ in Figure 5 corresponds to a combustion temperature of the particulates.

Next, three pieces of cubes of 5 mm square were cut out by cutting the oxidation catalyst device 1 for exhaust gas purification in the present Example with a diamond cutter.

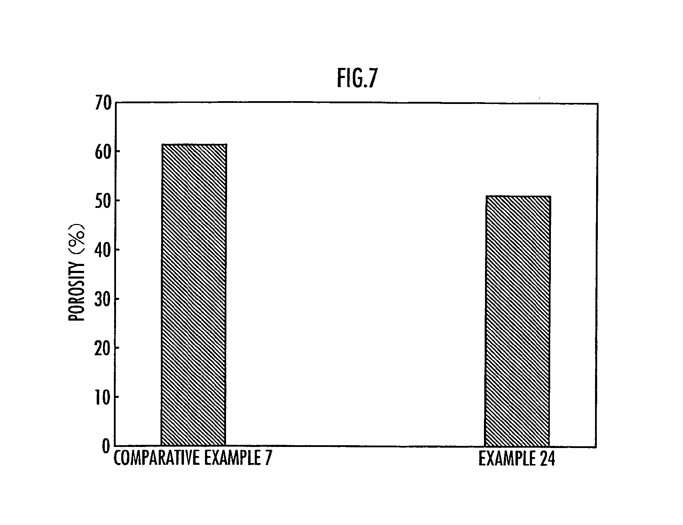

Subsequently, the diameters of the pores 7 in the porous filter substrate 2, the diameters of the pores in the catalyst layers 3a and 3b, and the total porosity of both of the porous filter substrate 2 and the catalyst layers 3a and 3b were measured on the oxidation catalyst device 1 for exhaust gas purification of the first cube, with the use of an automatic mercury porosimeter. The measurement result on the diameters of the pores 7 in the porous filter substrate 2 and the diameters of the pores in the catalyst layers 3a and 3b is shown in Figure 6. The measurement result on the total porosity of both of the porous filter substrate 2 and the catalyst layers 3a and 3b is shown in Figure 7.

As is shown in Figure 6, the diameters of the pores 7 in the porous filter substrate 2 and the diameters of the pores in the catalyst layers 3a and 3b, in the oxidation catalyst device 1 for exhaust gas purification according to the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.01 to 2.0 µm. In addition, as is shown in Figure 7, it is obvious that the total porosity of both of the porous filter substrate 2 and the catalyst layers 3a and 3b is 50.4% by volume in the oxidation catalyst device 1 for exhaust gas purification according to the present Example,

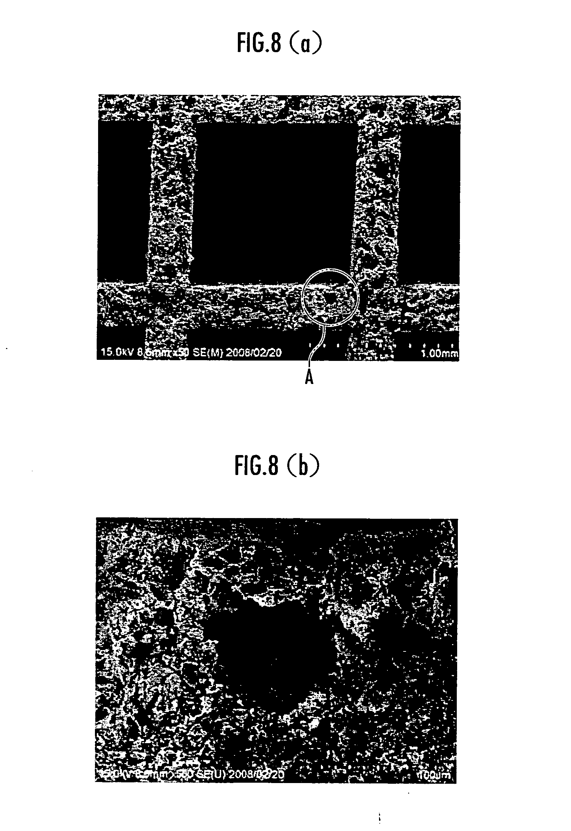

Next, the cross sectional image of the oxidation catalyst device 1 for exhaust gas purification of the second cube was taken with the use of a transmission-type electron microscope. Figures 8(a) and 8(b) illustrate a cross sectional image of an oxidation catalyst device 1 for exhaust gas purification. As is illustrated in Figure 8(b), it is obvious that the oxidation catalyst device 1 for exhaust gas purification according to the present Example has a second catalyst layer 3b formed on the surface of the wall face of the pore 7 in the cell partition wall 6.

Next, the component of the oxidation catalyst which constitutes the catalyst layers 3a and 3b, in the oxidation catalyst device 1 for exhaust gas purification of the third cube, was evaluated with an X-ray diffractometer. According to the result of the X-ray diffraction analysis on the catalyst layers 3a and 3b, the above described oxidation catalyst has a crystal peak originating in YMO₃ (M is metal) of a composite metal oxide, and the crystal peak originating in zirconium oxide having a main peak in the vicinity of 2θ = 31°.

Accordingly, it is obvious that the above described oxidation catalyst is formed of a mixture of: a composite metal oxide represented by the chemical formula of Y_{0.95}Ag_{0.05}Mn_{0.95}Ti_{0.05}O₃; and zirconium oxide. For information, the above described zirconium oxide is a cubic yttrium-stabilized zirconia formed by the dissolution of one part of yttrium in Y_{0.95}Ag_{0.05}Mn_{0.95}Ti_{0.05}O₃ of the composite metal oxide into the zirconium oxide.

### [Comparative Example 6]

In the present Comparative Example, an oxidation catalyst device for exhaust gas purification was manufactured in the completely same manner as in Example 24, except that catalyst layers 3a and 3b were not formed at all.

Subsequently, a catalyst performance evaluation test was conducted on the oxidation catalyst device for exhaust gas purification in the present Comparative Example, in the completely same manner as in Example 24. The result is shown in Figure 5.

From Figure 5, it is obvious that an oxidation catalyst device 1 for exhaust gas purification in Example 24 can oxidize and combust the particulates in the exhaust gas of an internal combustion engine at a lower temperature, compared to the oxidation catalyst device for exhaust gas purification in the present Comparative Example.

Next, one piece of a cube of 5 mm square was cut out by cutting the oxidation catalyst device for exhaust gas purification in the present Comparative Example with a diamond cutter.

Subsequently, the diameters of the pores in the porous filter substrate in the oxidation catalyst device for exhaust gas purification of the above described cube were measured with the use of the automatic mercury porosimeter. The measurement result on the diameters of the pores in the porous filter substrate is shown in Figure 6.

As is shown in Figure 6, it is obvious that the pores in the porous filter substrate in the oxidation catalyst device for exhaust gas purification in the present Comparative Example have the average diameter in the range of 20 to 25 µm.

### [Comparative Example 7]

In the present Comparative Example, firstly, a catalyst precursor slurry was prepared in the completely same manner as in Example 24, except that yttrium nitrate pentahydrate, manganese nitrate hexahydrate, citric acid and water were mixed in a molar ratio of 1 : 1 : 6 : 40.

Subsequently, the oxidation catalyst device for exhaust gas purification in the present Comparative Example was manufactured in the completely same manner as in Example 24, except that the first catalyst layer and the second catalyst layer were formed with the use of the catalyst precursor slurry that was obtained in the present Comparative Example, which were formed of a porous body of a mixture of: a composite metal oxide which is represented by the chemical formula of YMnO₃; and zirconium oxide.

Subsequently, a catalyst performance evaluation test was conducted on the oxidation catalyst device for exhaust gas purification in the present Comparative Example, in the completely same manner as in Example 24. The result is shown in Figure 5.

From Figure 5, it is obvious that an oxidation catalyst device 1 for exhaust gas purification in Example 24 can oxidize and combust the particulates in the exhaust gas of an internal combustion engine at a lower temperature, compared to the oxidation catalyst device for exhaust gas purification in the present Comparative Example.

Subsequently, one piece of a cube was cut out from the oxidation catalyst device for exhaust gas purification in the present Comparative Example, in the completely same manner as in Example 24, and the diameters of the pores in the porous filter substrate, the diameters of the pores of the first and second catalyst layers, and the total porosity of both of the porous filter substrate and the first and second catalyst layers were measured. The measurement result of the diameters of the pores in the porous filter substrate and the diameters of the pores in the first and second catalyst layers is shown in Figure 6. The measurement result of the total porosity of both of the porous filter substrate and the first and second catalyst layers is shown in Figure 7.

As is shown in Figure 6, the diameters of the pores in the porous filter substrate and the diameters of the pores in the first and second catalyst layers were in the range of 0.01 to 100 µm, in the oxidation catalyst device for exhaust gas purification in the present Comparative Example. Here, considering that the average diameter of the pores in the porous filter substrate is in the range of 20 to 25 µm, it is assumed that the diameters of the pores in the first and second catalyst layers are in the range of 0.20 to 5.0 µm. In addition, as is shown in Figure 7, it is obvious that the total porosity of both of the porous filter substrate and the first and second catalyst layers is 61.1% by volume in the oxidation catalyst device for exhaust gas purification in the present Comparative Example.

### Example 25

In the present Example, firstly, a catalyst precursor slurry was prepared in the completely same manner as in Example 24, except that the temperature in the primary baking was set at 350°C.

Subsequently, the oxidation catalyst device 1 for exhaust gas purification was manufactured in the completely same manner as in Example 24, except that the catalyst precursor slurry which was obtained in the present Example was used.

Subsequently, a catalyst performance evaluation test was conducted on the oxidation catalyst device 1 for exhaust gas purification in the present Example, in the following way. Firstly, the oxidation catalyst device 1 for exhaust gas purification was mounted on an exhaust system of a diesel engine which had 2.2 L of air volume displacement and was provided in an engine bench. Subsequently, the above described diesel engine was operated to make the oxidation catalyst device 1 for exhaust gas purification collect 1.4g of particulates per L of the apparent volume of the oxidation catalyst device 1 for exhaust gas purification. The operating conditions of the above described diesel engine were 300°C of the inflow gas temperature into the oxidation catalyst device 1 for exhaust gas purification, 1,500 rpm of the engine revolution speed, and 80 N/m of the torque.

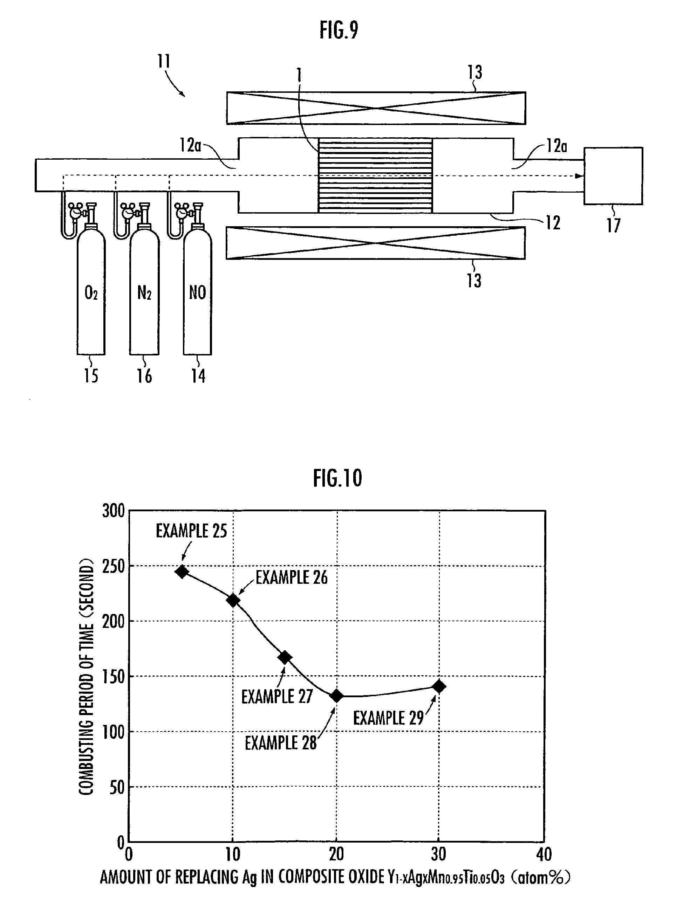

Subsequently, the oxidation catalyst device 1 for exhaust gas purification, which collected a predetermined amount of particulates therein, was taken out from the above described exhaust system, and was fixed in a quartz tube 12 of a catalyst evaluation system 11 illustrated in Figure 9. The catalyst evaluation system 11 has a heating furnace 13 provided in the periphery of the quartz tube 12, and a plurality of gas cylinders 14, 15 and 16 provided in a one end 12a side of the quartz tube 12. The gas cylinder 14 accommodates nitrogen monoxide, the gas cylinder 15 accommodates oxygen, and the gas cylinder 16 accommodates nitrogen, respectively.

Subsequently, the oxidation catalyst device 1 for exhaust gas purification was heated to the temperature of 600°C from room temperature by the heating furnace 13, while the nitrogen gas which was supplied from the gas cylinder 16 was supplied from the one end 12a (supply port) of the quartz tube 12 at a flow rate of 12.8 L/minute.

Subsequently, a mixture gas with a volume ratio of 0.02 : 3.8 : 96.18 was produced by supplying nitrogen monoxide, oxygen and nitrogen from the gas cylinders 14, 15 and 16. Subsequently, the above described mixture gas was supplied from the one end 12a of the quartz tube 12 at a flow rate of 13.5 L/minute. Then, carbon monoxide and carbon dioxide which were generated by the oxidization and combustion of particulates collected in the oxidation catalyst device 1 for exhaust gas purification were introduced into a gas analyzer 17 (made by Horiba, Ltd., and having trade name: MEXA-7500D) which was connected to the other end 12b (discharge port) of the quartz tube 12. Subsequently, the concentrations of the carbon monoxide and the carbon dioxide were measured with the gas analyzer 17, and a period of time spent for combusting 90 mass% of the particulates collected by the oxidation catalyst device 1 for exhaust gas purification was measured. The result is shown in Figure 10.

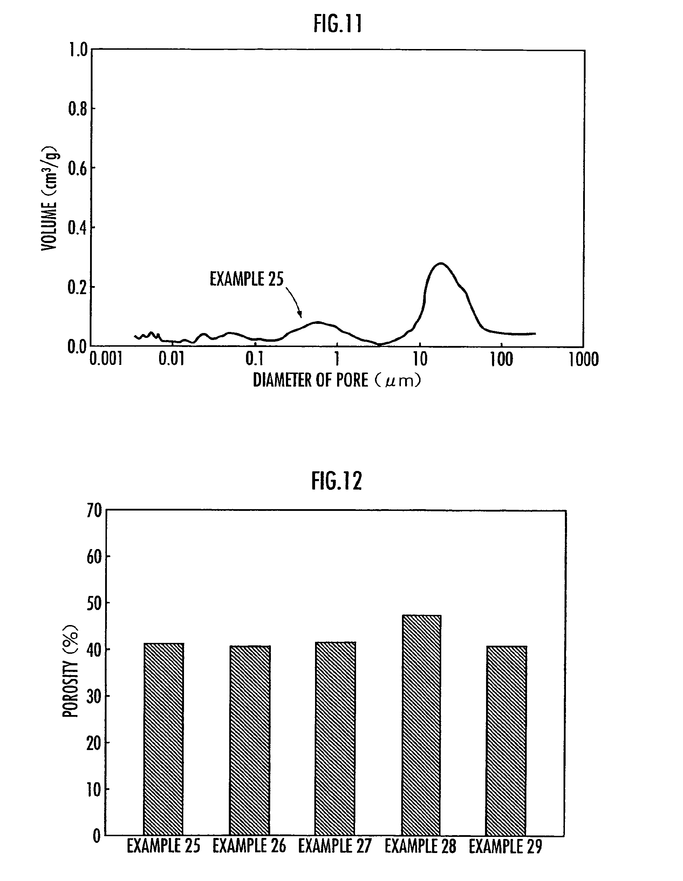

Next, one piece of a cube was cut out from the oxidation catalyst device 1 for exhaust gas purification in the present Example, in the completely same manner as in Example 24, and the diameters of the pores 7 in the porous filter substrate 2, the diameters of the pores in the catalyst layers 3a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 11. The measurement result on the total porosity of both of the porous filter substrate 2 and the catalyst layers 3a and 3b is shown in Figure 12.

As is shown in Figure 11, the diameters of the pores 7 in the porous filter substrate 2 and the diameters of the pores in the catalyst layers 3a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.01 to 2.0 µm. In addition, as is shown in Figure 12, it is obvious that the total porosity of both of the porous filter substrate 2 and the catalyst layers 3a and 3b is 41.5% by volume in the oxidation catalyst device 1 for exhaust gas purification in the present Example.

### Example 26

In the present Example, firstly, a catalyst precursor slurry was prepared in the completely same manner as in Example 25, except that yttrium nitrate pentahydrate, silver nitrate, manganese nitrate hexahydrate, anatase of titanium oxide, citric acid and water were mixed in a molar ratio of 0.90 : 0.10 : 0.95 : 0.05 : 6 : 40.

Subsequently, the oxidation catalyst device 1 for exhaust gas purification was manufactured with the use of the catalyst precursor slurry which was obtained in the present Example, in the completely same manner as in Example 25. The obtained oxidation catalyst device 1 for exhaust gas purification has the first catalyst layer 3 a and the second catalyst layer 3b which are formed of a porous body of a mixture of: a composite metal oxide which is represented by the chemical formula of Y_{0.9}Ag_{0.1}Mn_{0.95}Ti_{0.05}O₃; and zirconium oxide.

Subsequently, a catalyst performance evaluation test was conducted on the oxidation catalyst device 1 for exhaust gas purification in the present Example, in the completely same manner as in Example 25, except that 1.9 g of particulates per L of the apparent volume of the oxidation catalyst device 1 for exhaust gas purification were collected. The result is shown in Figure 10.

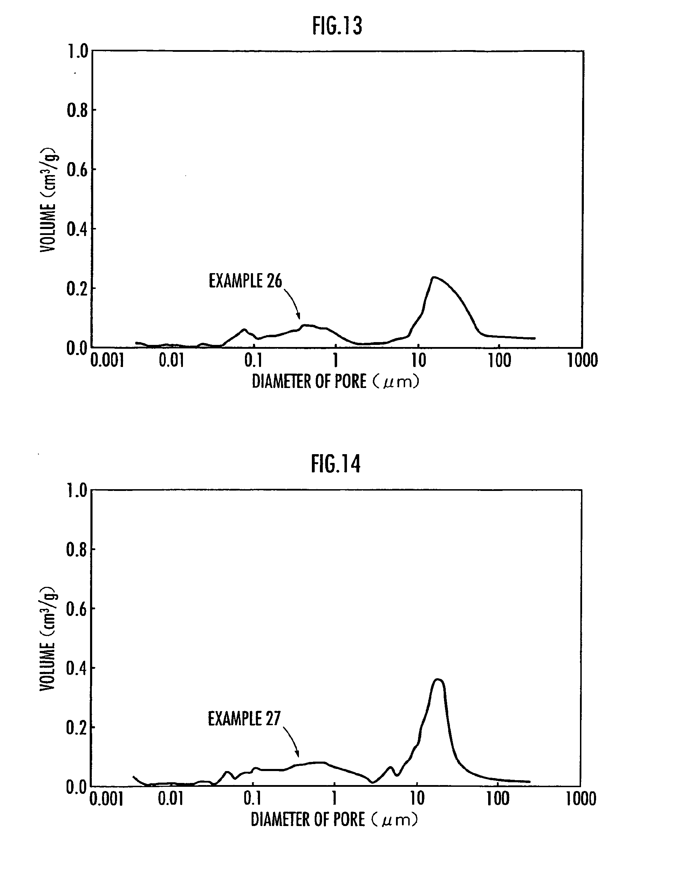

Next, one piece of a cube was cut out from the oxidation catalyst device 1 for exhaust gas purification in the present Example in the completely same manner as in Example 25, and the diameters of the pores 7 in the porous filter substrate 2, the diameters of the pores of the catalyst layers 3 a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 13. The measurement result on the total porosity of both of the porous filter substrate 2 and the catalyst layers 3 a and 3b is shown in Figure 12.

As is shown in Figure 13, the diameters of the pores 7 in the porous filter substrate 2 and the diameters of the pores in the catalyst layers 3a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.02 to 2.0 µm. In addition, as is shown in Figure 12, it is obvious that the total porosity of both of the porous filter substrate 2 and the catalyst layers 3a and 3b is 41.0% by volume in the oxidation catalyst device 1 for exhaust gas purification in the present Example.

### Example 27

In the present Example, firstly, a catalyst precursor slurry was prepared in the completely same manner as in Example 25, except that yttrium nitrate pentahydrate, silver nitrate, manganese nitrate hexahydrate, anatase of titanium oxide, citric acid and water were mixed in a molar ratio of 0.85 : 0.15 : 0.95 : 0.05 : 6 : 40.

Subsequently, the oxidation catalyst device 1 for exhaust gas purification was manufactured with the use of the catalyst precursor slurry which was obtained in the present Example, in the completely same manner as in Example 25. The obtained oxidation catalyst device 1 for exhaust gas purification has the first catalyst layer 3a and the second catalyst layer 3b which are formed of a porous body of a mixture of: a composite metal oxide which is represented by the chemical formula of Y_{0.85}Ag_{0.15}Mn_{0.95}Ti_{0.05}O₃; and zirconium oxide.

Subsequently, a catalyst performance evaluation test was conducted on the oxidation catalyst device 1 for exhaust gas purification in the present Example, in the completely same manner as in Example 25, except that 1.8 g of particulates per L of the apparent volume of the oxidation catalyst device 1 for exhaust gas purification were collected. The result is shown in Figure 10.

Next, one piece of a cube was cut out from the oxidation catalyst device 1 for exhaust gas purification in the present Example in the completely same manner as in Example 25, and the diameters of the pores 7 in the porous filter substrate 2, the diameters of the pores of the catalyst layers 3a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 14. The measurement result on the total porosity of both of the porous filter substrate 2 and the catalyst layers 3a and 3b is shown in Figure 12.

As is shown in Figure 14, the diameters of the pores 7 in the porous filter substrate 2 and the diameters of the pores in the catalyst layers 3 a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.02 to 3.0 µm. In addition, as is shown in Figure 12, it is obvious that the total porosity of both of the porous filter substrate 2 and the catalyst layers 3a and 3b is 42.0% by volume in the oxidation catalyst device 1 for exhaust gas purification in the present Example.

### Example 28

In the present Example, firstly, a catalyst precursor slurry was prepared in the completely same manner as in Example 25, except that yttrium nitrate pentahydrate, silver nitrate, manganese nitrate hexahydrate, anatase of titanium oxide, citric acid and water were mixed in a molar ratio of 0.80 : 0.20 : 0.95 : 0.05 : 6 : 40.

Subsequently, the oxidation catalyst device 1 for exhaust gas purification was manufactured with the use of the catalyst precursor slurry which was obtained in the present Example, in the completely same manner as in Example 25. The obtained oxidation catalyst device 1 for exhaust gas purification has the first catalyst layer 3a and the second catalyst layer 3b which are formed of a porous body of a mixture of: a composite metal oxide which is represented by the chemical formula of Y_{0.8}Ag_{0.2}Mn_{0.95}Ti_{0.05}O₃; and zirconium oxide.

Subsequently, a catalyst performance evaluation test was conducted on the oxidation catalyst device 1 for exhaust gas purification in the present Example, in the completely same manner as in Example 25, except that 1.8 g of particulates per L of the apparent volume of the oxidation catalyst device 1 for exhaust gas purification were collected. The result is shown in Figure 10.

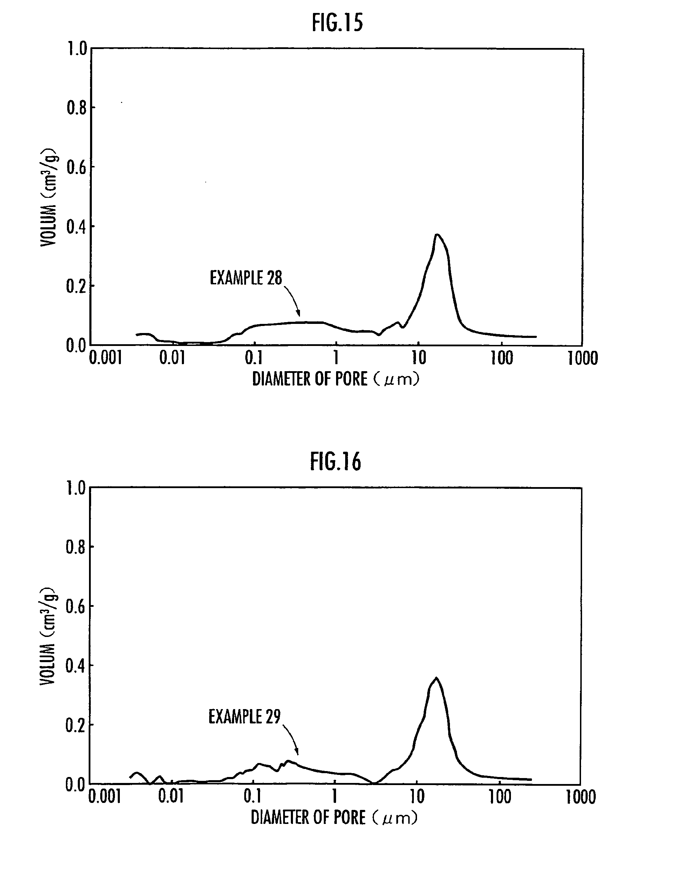

Next, one piece of a cube was cut out from the oxidation catalyst device 1 for exhaust gas purification in the present Example in the completely same manner as in Example 25, and the diameters of the pores 7 in the porous filter substrate 2, the diameters of the pores of the catalyst layers 3a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 15. The measurement result on the total porosity of both of the porous filter substrate 2 and the catalyst layers 3a and 3b is shown in Figure 12.

As is shown in Figure 15, the diameters of the pores 7 in the porous filter substrate 2 and the diameters of the pores in the catalyst layers 3a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.02 to 2.0 µm. In addition, as is shown in Figure 12, it is obvious that the total porosity of both of the porous filter substrate 2 and the catalyst layers 3a and 3b is 47.8% by volume in the oxidation catalyst device 1 for exhaust gas purification in the present Example.

### Example 29

In the present Example, firstly, a catalyst precursor slurry was prepared in the completely same manner as in Example 25, except that yttrium nitrate pentahydrate, silver nitrate, manganese nitrate hexahydrate, anatase of titanium oxide, citric acid and water were mixed in a molar ratio of 0.70 : 0.30 : 0.95 : 0.05 : 6 : 40.

Subsequently, the oxidation catalyst device 1 for exhaust gas purification was manufactured with the use of the catalyst precursor slurry which was obtained in the present Example, in the completely same manner as in Example 25. The obtained oxidation catalyst device 1 for exhaust gas purification has the first catalyst layer 3a and the second catalyst layer 3b which are formed of a porous body of a mixture of a composite metal oxide which is represented by the chemical formula of Y_{0.7}Ag_{0.3}Mn_{0.95}Ti_{0.05}O₃; and zirconium oxide.

Subsequently, a catalyst performance evaluation test was conducted on the oxidation catalyst device 1 for exhaust gas purification in the present Example, in the completely same manner as in Example 25, except that 1.7 g of particulates per L of the apparent volume of the oxidation catalyst device 1 for exhaust gas purification were collected. The result is shown in Figure 10.

From Figure 10, it is obvious that period of time spent for combusting 90 mass% of the particulates collected in the oxidation catalyst devices 1 for exhaust gas purification in any one of Examples 25 to 29 is less than 250 seconds. Accordingly, it is obvious that the oxidation catalyst devices 1 for exhaust gas purification in Examples 25 to 29 can oxidize and combust the particulates in the exhaust gas of the internal combustion engine in a short period of time.

Next, one piece of a cube was cut out from the oxidation catalyst device 1 for exhaust gas purification in the present Example in the completely same manner as in Example 25, and the diameters of the pores 7 in the porous filter substrate 2, the diameters of the pores of the catalyst layers 3a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 16. The measurement result on the total porosity of both of the porous filter substrate 2 and the catalyst layers 3a and 3b is shown in Figure 12.

As is shown in Figure 16, the diameters of the pores 7 in the porous filter substrate 2 and the diameters of the pores in the catalyst layers 3a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.02 to 2.0 µm. In addition, as is shown in Figure 12, it is obvious that the total porosity of both of the porous filter substrate 2 and the catalyst layers 3a and 3b is 41.3% by volume in the oxidation catalyst device 1 for exhaust gas purification in the present Example.

### Example 30

From Figure 10, it is obvious that among the oxidation catalyst devices 1 for exhaust gas purification in Examples 25 to 29, the oxidation catalyst device 1 for exhaust gas purification in Example 28, in which a composite metal oxide is represented by the chemical formula of Y_{0.8}Ag_{0.2}Mn_{0.95}Ti_{0.05}O₃, shows the shortest period of the above described time.

In the present Example, firstly, a catalyst precursor slurry was prepared in the completely same manner as in Example 28, except that yttrium nitrate pentahydrate, silver nitrate, manganese nitrate hexahydrate, anatase of titanium oxide, citric acid and water were mixed in a molar ratio of 0.80 : 0.20 : 0.90 : 0.10 : 6 : 40.

Subsequently, the oxidation catalyst device 1 for exhaust gas purification was manufactured with the use of the catalyst precursor slurry which was obtained in the present Example, in the completely same manner as in Example 28. The obtained oxidation catalyst device 1 for exhaust gas purification has the first catalyst layer 3a and the second catalyst layer 3b which are formed of a porous body of a mixture of: a composite metal oxide which is represented by the chemical formula of Y_{0.8}Ag_{0.2}Mn_{0.9}Ti_{0.1}O₃; and zirconium oxide.

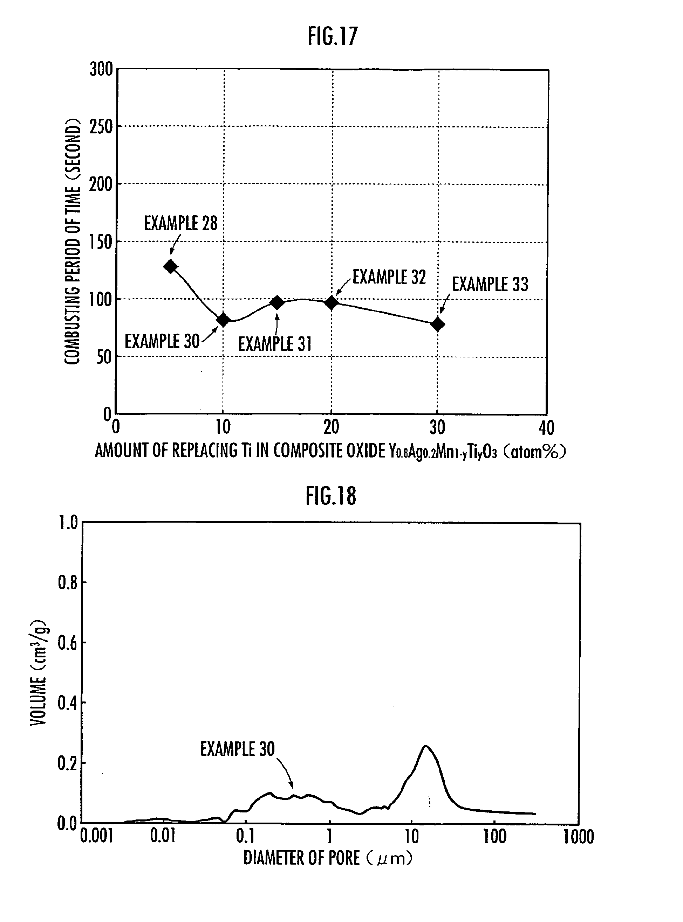

Subsequently, a catalyst performance evaluation test was conducted on the oxidation catalyst device 1 for exhaust gas purification in the present Example, in the completely same manner as in Example 28, except that 1.4 g of particulates per L of the apparent volume of the oxidation catalyst device 1 for exhaust gas purification were collected. The result is shown in Figure 17.

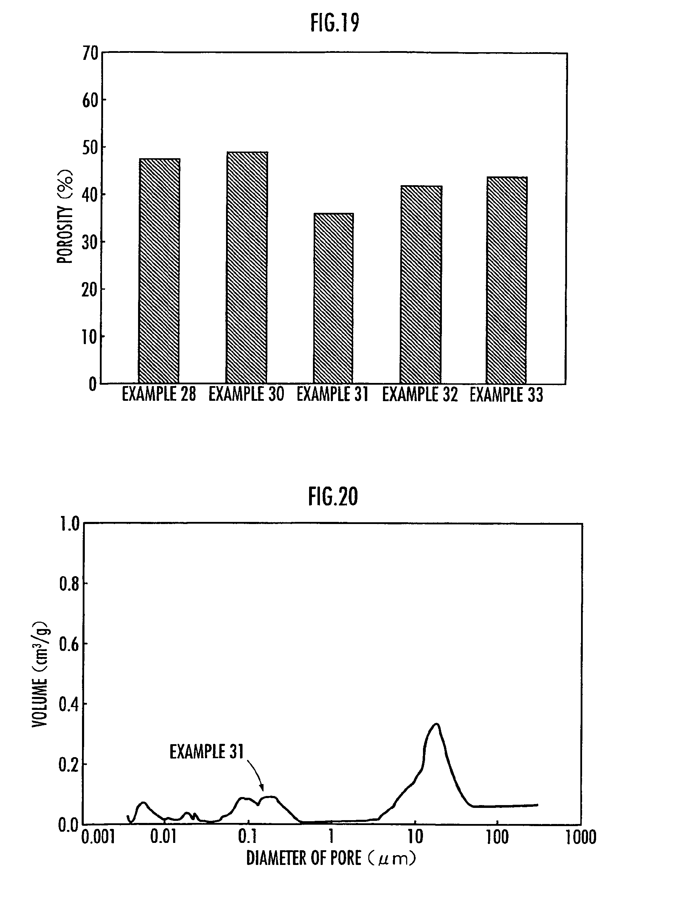

Next, one piece of a cube was cut out from the oxidation catalyst device 1 for exhaust gas purification in the present Example in the completely same manner as in Example 28, and the diameters of the pores 7 in the porous filter substrate 2, the diameters of the pores of the catalyst layers 3a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 18. The measurement result on the total porosity of both of the porous filter substrate 2 and the catalyst layers 3a and 3b is shown in Figure 19.

As is shown in Figure 18, the diameters of the pores 7 in the porous filter substrate 2 and the diameters of the pores in the catalyst layers 3a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.02 to 2.0 µm. In addition, as is shown in Figure 19, it is obvious that the total porosity of both of the porous filter substrate 2 and the catalyst layers 3a and 3b is 48.6% by volume in the oxidation catalyst device 1 for exhaust gas purification in the present Example.

### Example 31

In the present Example, firstly, a catalyst precursor slurry was prepared in the completely same manner as in Example 28, except that yttrium nitrate pentahydrate, silver nitrate, manganese nitrate hexahydrate, anatase of titanium oxide, citric acid and water were mixed in a molar ratio of 0.80 : 0.20 : 0.85 : 0.15 : 6 : 40.

Subsequently, the oxidation catalyst device 1 for exhaust gas purification was manufactured with the use of the catalyst precursor slurry which was obtained in the present Example, in the completely same manner as in Example 28. The obtained oxidation catalyst device 1 for exhaust gas purification has the first catalyst layer 3a and the second catalyst layer 3b which are formed of a porous body of a mixture of: a composite metal oxide which is represented by the chemical formula of Y_{0.8}Ag_{0.2}Mn_{0.85}Ti_{0.15}O₃; and zirconium oxide.

Subsequently, a catalyst performance evaluation test was conducted on the oxidation catalyst device 1 for exhaust gas purification in the present Example, in the completely same manner as in Example 28, except that 1.6 g of particulates per L of the apparent volume of the oxidation catalyst device 1 for exhaust gas purification were collected. The result is shown in Figure 17.

Next, one piece of a cube was cut out from the oxidation catalyst device 1 for exhaust gas purification in the present Example in the completely same manner as in Example 28, and the diameters of the pores 7 in the porous filter substrate 2, the diameters of the pores of the catalyst layers 3a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 20. The measurement result on the total porosity of both of the porous filter substrate 2 and the catalyst layers 3a and 3b is shown in Figure 19.

As is shown in Figure 20, the diameters of the pores 7 in the porous filter substrate 2 and the diameters of the pores in the catalyst layers 3a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.01 to 0.5 µm. In addition, as is shown in Figure 19, it is obvious that the total porosity of both of the porous filter substrate 2 and the catalyst layers 3a and 3b is 35.5% by volume in the oxidation catalyst device 1 for exhaust gas purification in the present Example.

### Example 32

In the present Example, firstly, a catalyst precursor slurry was prepared in the completely same manner as in Example 28, except that yttrium nitrate pentahydrate, silver nitrate, manganese nitrate hexahydrate, anatase of titanium oxide, citric acid and water were mixed in a molar ratio of 0.80 : 0.20 : 0.80 : 0.20 : 6 : 40.

Subsequently, the oxidation catalyst device 1 for exhaust gas purification was manufactured with the use of the catalyst precursor slurry which was obtained in the present Example, in the completely same manner as in Example 28. The obtained oxidation catalyst device 1 for exhaust gas purification has the first catalyst layer 3a and the second catalyst layer 3b which are formed of a porous body of a mixture of: a composite metal oxide which is represented by the chemical formula of Y_{0.8}Ag_{0.2}Mn_{0.8}Ti_{0.2}O₃; and zirconium oxide.

Subsequently, a catalyst performance evaluation test was conducted on the oxidation catalyst device 1 for exhaust gas purification in the present Example, in the completely same manner as in Example 28, except that 1.4 g of particulates per L of the apparent volume of the oxidation catalyst device 1 for exhaust gas purification were collected. The result is shown in Figure 17.

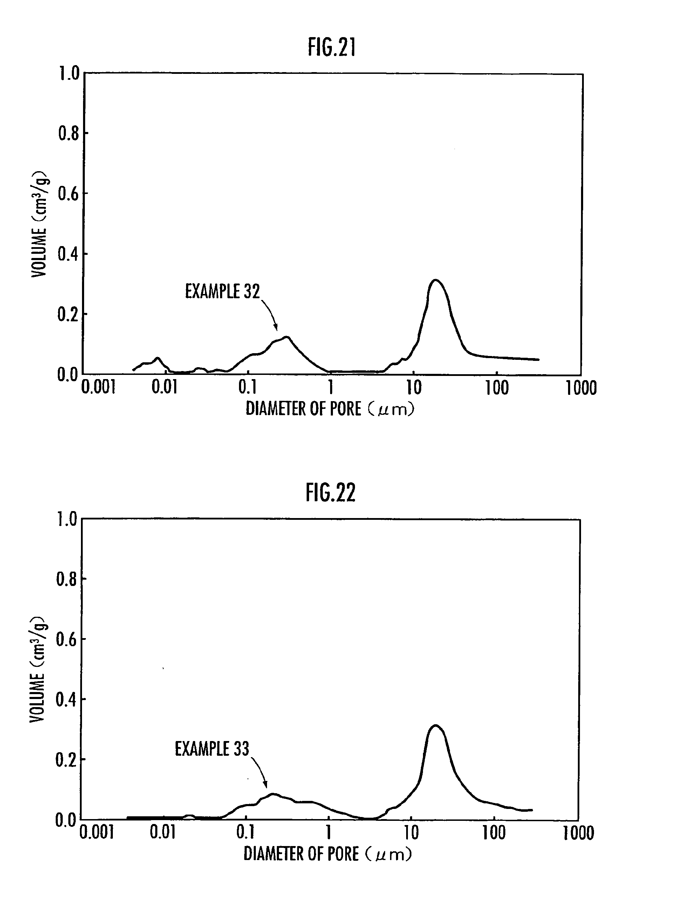

Next, one piece of a cube was cut out from the oxidation catalyst device 1 for exhaust gas purification in the present Example in the completely same manner as in Example 28, and the diameters of the pores 7 in the porous filter substrate 2, the diameters of the pores of the catalyst layers 3a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 21. The measurement result on the total porosity of both of the porous filter substrate 2 and the catalyst layers 3a and 3b is shown in Figure 19.

As is shown in Figure 21, the diameters of the pores 7 in the porous filter substrate 2 and the diameters of the pores in the catalyst layers 3a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.20 to 1.0 µm. In addition, as is shown in Figure 19, it is obvious that the total porosity of both of the porous filter substrate 2 and the catalyst layers 3a and 3b is 41.2% by volume in the oxidation catalyst device 1 for exhaust gas purification in the present Example.

### Example 33

In the present Example, firstly, a catalyst precursor slurry was prepared in the completely same manner as in Example 28, except that yttrium nitrate pentahydrate, silver nitrate, manganese nitrate hexahydrate, anatase of titanium oxide, citric acid and water were mixed in a molar ratio of 0.80 : 0.20 : 0.70 : 0.30 : 6 : 40.

Subsequently, the oxidation catalyst device 1 for exhaust gas purification was manufactured with the use of the catalyst precursor slurry which was obtained in the present Example, in the completely same manner as in Example 28. The obtained oxidation catalyst device 1 for exhaust gas purification has the first catalyst layer 3a and the second catalyst layer 3b which are formed of a porous body of a mixture of: a composite metal oxide which is represented by the chemical formula of Y_{0.8}Ag_{0.2}Mn_{0.7}Ti_{0.3}O₃; and zirconium oxide.

Subsequently, a catalyst performance evaluation test was conducted on the oxidation catalyst device 1 for exhaust gas purification in the present Example, in the completely same manner as in Example 28, except that 1.5 g of particulates per L of the apparent volume of the oxidation catalyst device 1 for exhaust gas purification were collected. The result is shown in Figure 17.

Next, one piece of a cube was cut out from the oxidation catalyst device 1 for exhaust gas purification in the present Example in the completely same manner as in Example 28, and the diameters of the pores 7 in the porous filter substrate 2, the diameters of the pores of the catalyst layers 3a and 3b, and the total porosity of both of the porous filter substrate 2 and the catalyst layers 3a and 3b were measured. The measurement result on the diameters of the pores 7 in the porous filter substrate 2 and the diameters of the pores in the catalyst layers 3a and 3b is shown in Figure 22. The measurement result on the total porosity of both of the porous filter substrate 2 and the catalyst layers 3 a and 3b is shown in Figure 19.

As is shown in Figure 22, the diameters of the pores 7 in the porous filter substrate 2 and the diameters of the pores in the catalyst layers 3a and 3b, in the oxidation catalyst device 1 for exhaust gas purification in the present Example, were in the range of 0.01 to 100 µm. Here, considering that the average diameter of the pores 7 in the porous filter substrate 2 is in the range of 20 to 25 µm, it is assumed that the diameters of the pores in the catalyst layers 3a and 3b are in the range of 0.02 to 2.0 µm. In addition, as is shown in Figure 19, it is obvious that the total porosity of both of the porous filter substrate 2 and the catalyst layers 3a and 3b is 43.3% by volume in the oxidation catalyst device 1 for exhaust gas purification in the present Example.

From Figure 17, it is obvious that period of time spent for combusting 90 mass% of the particulates collected in the oxidation catalyst devices 1 for exhaust gas purification in any one of Examples 28, 30 to 33 is less than 130 seconds. Accordingly, it is obvious that the oxidation catalyst devices 1 for exhaust gas purification in Examples 28 and 30 to 33 can oxidize and combust the particulates in the exhaust gas of the interal combustion engine in a shorter period of time, compared to the oxidation catalyst devices 1 for exhaust gas purification in Examples 25 to 27 and 29.

### Reference Signs List

1 ... Oxidation catalyst device for exhaust gas purification, 2 ... Porous filter substrate, 3a ... First catalyst layer, 3b ... Second catalyst layer, 4 ... Inflow cell, 5 ... Outflow cell, 6 ... cell partition wall, and 7 ... Pore

## Claims

1. An oxidation catalyst which oxidizes contents in an exhaust gas of an internal combustion engine to purify the gas, comprising a mixture of: any one composite metal oxide represented by chemical formula of YMnO₃, Y₁₋ₓAgₓMnO₃ (0.01 ≤ x ≤ 0.30) and Y₁₋ₓAgₓMn_{1-y}AyO₃ (0.01 ≤ x ≤ 0.30, 0.005 ≤ y ≤ 0.30, and A is one metal selected from the group consisting of Ti, Ce and Ru); and zirconium oxide.

2. The oxidation catalyst according to claim 1, wherein the zirconium oxide contained in the oxidation catalyst is in the range of 5 to 20 mass% with respect to the composite metal oxide.

3. The oxidation catalyst according to claim 1, wherein the A in the composite metal oxide is Ti.

4. An oxidation catalyst device for exhaust gas purification comprising a porous filter substrate having a wall flow structure in which one end is an exhaust-gas inflow part, and the other end is an exhaust-gas outflow part, and an oxidation catalyst according to claim 1 which is carried on the porous filter substrate, wherein
the porous filter substrate comprises: a plurality of inflow cells in which the exhaust-gas inflow parts out of a plurality of through holes that are formed so as to penetrate in the axial direction are opened, while the exhaust-gas outflow parts are blocked; a plurality of outflow cells in which the exhaust-gas inflow parts of the plurality of the through holes are blocked, while the exhaust-gas outflow parts are opened; and a cell partition wall which separates the inflow cells and the outflow cells, and
the oxidation catalyst comprises: a first catalyst layer which is carried on a surface at least on the inflow cell side of the cell partition wall; and a second catalyst layer which is carried on the surface of the wall face of a pore of the porous filter substrate which forms the cell partition wall,
and makes particulates in the exhaust gas oxidized by the oxidation catalyst while making an exhaust gas of an internal combustion engine which flows in from the exhaust-gas inflow part pass through the cell partition wall into the outflow cells, and the purified exhaust gas flow out from the exhaust-gas outflow part, wherein
the oxidation catalyst is formed of a porous body of a mixture of: a composite metal oxide which is represented by the chemical formula of Y₁₋ₓAgₓMn_{1-y}Ti_{y}O₃ in which x and y satisfy 0.01 ≤ x ≤ 0.30 and 0.005 *≤* y ≤ 0.30, respectively; and zirconium oxide.

5. The oxidation catalyst device for exhaust gas purification according to claim 4, wherein each of the catalyst layers is formed of a porous body having pores with diameters in the range of 0.01 to 3.0 µm, and the total porosity of both of the porous filter substrate and each of the catalyst layers is in the range of 30 to 55% by volume.

6. The oxidation catalyst device for exhaust gas purification according to claim 5, wherein each of the catalyst layers has such porosity as to satisfy that the total porosity of both of the porous filter substrate and each of the catalyst layers is in the range of 35 to 51 % by volume.

## Patentansprüche

1. Oxidationskatalysator, welcher Inhaltsstoffe in einem Abgas eines Verbrennungsmotors oxidiert, um das Gas zu reinigen, umfassend ein Gemisch aus einem beliebigen Metallverbundoxid der chemischen Formel YMnO₃, Y₁₋ₓAgₓMnO₃ (0,01 ≤ x ≤ 0,30) und Y₁₋ₓAgₓMn_{1-y}A_{y}O₃ (0,01 ≤ x ≤ 0,30, 0,005 ≤ y ≤ 0,30, und A ist ein Metall, ausgewählt aus der Gruppe bestehend aus Ti, Ce und Ru); und Zirkoniumoxid.

2. Oxidationskatalysator nach Anspruch 1, wobei das in dem Oxidationskatalysator enthaltene Zirkoniumoxid im Bereich von 5 bis 20 Massen-% bezogen auf das Metallverbundoxid vorliegt.

3. Oxidationskatalysator nach Anspruch 1, wobei das A in dem Metallverbundoxid Ti ist.

4. Oxidationskatalysator-Vorrichtung zur Abgasreinigung, umfassend ein poröses Filtersubstrat mit einer Wandströmungs-Struktur, in der ein Ende ein Abgaseinströmungsteil ist und das andere Ende ein Abgasausströmungsteil ist, und einen Oxidationskatalysator gemäß Anspruch 1, der auf dem porösen Filtersubstrat geträgert ist, wobei
das poröse Filtersubstrat umfasst: eine Mehrzahl von Einströmungszellen in welchen die Abgaseinströmungsteile aus einer Mehrzahl von Durchgangslöchern, die so ausgebildet sind, um in axialer Richtung einzudringen, geöffnet sind, während die Abgasausströmungsteile blockiert sind; eine Mehrzahl von Ausströmungszellen, in denen die Abgaseinströmungsteile der Mehrzahl von Durchgangslöchern blockiert sind, während die Abgasausströmungsteile geöffnet sind; und eine Zelltrennwand, welche die Einströmungszellen und die Ausströmungszellen trennt, und
der Oxidationskatalysator umfasst: eine erste Katalysatorschicht, die auf einer Oberfläche zumindest auf der Einströmungszellseite der Zelltrennwand geträgert ist; und eine zweite Katalysatorschicht, die auf der Oberfläche der Wandseite einer Pore des porösen Filtersubstrats geträgert ist, welches die Zelltrennwand bildet, und welche Teilchen in dem Abgas durch den Oxidationskatalysator oxidiert während ein Abgas aus einem Verbrennungsmotor, welches aus dem Abgaseinströmungsteil einströmt, durch die Zelltrennwand in die Ausströmungszellen passiert und das gereinigte Abgas aus dem Abgasausströmungsteil ausströmt, wobei
der Oxidationskatalysator aus einem porösen Körper aus einem Gemisch aus einem Metallverbundoxid der chemischen Formel Y₁₋ₓAgₓMn_{1-y}Ti_{y}O₃, worin x und y 0,01 ≤ x ≤ 0,30 bzw. 0,005 ≤ y ≤ 0,30 erfüllen, und Zirkoniumoxid gebildet ist.

5. Oxidationskatalysatorvorrichtung zur Abgasreinigung nach Anspruch 4, wobei jede der Katalysatorschichten aus einem porösen Körper gebildet ist, der Poren mit Durchmessern im Bereich von 0,01 bis 3,0 µm aufweist, und die Gesamtporosität des porösen Filtersubstrats und jeder der Katalysatorschichten im Bereich von 30 bis 55 Volumen-% liegt.

6. Oxidationskatalysatorvorrichtung zur Abgasreinigung nach Anspruch 5, wobei jede der Katalysatorschichten eine derartige Porosität aufweist, dass die Gesamtporosität des porösen Filtersubstrats und jeder der Katalysatorschichten im Bereich von 35 bis 51 Volumen-% liegt.

## Revendications

1. Catalyseur d'oxydation qui oxyde des contenus dans un gaz d'échappement d'un moteur à combustion interne pour purifier le gaz, comprenant un mélange de : tout oxyde métallique composite représenté par la formule chimique de YMnO₃, Y₁₋ₓAgₓMnO₃ (0,01 ≤ x ≤ 0,30) et Y₁₋ₓAgₓMn_{1-y}AyO₃ (0,01 ≤ x ≤ 0,30, 0,005 ≤ y ≤ 0,30, et A est un métal choisi dans le groupe constitué par Ti, Ce et Ru) ; et d'oxyde de zirconium.

2. Catalyseur d'oxydation selon la revendication 1, dans lequel l'oxyde de zirconium contenu dans le catalyseur d'oxydation est dans la plage allant de 5 à 20% en masse par rapport à l'oxyde métallique composite.

3. Catalyseur d'oxydation selon la revendication 1, dans lequel A dans l'oxyde métallique composite est Ti.

4. Dispositif de catalyseur d'oxydation pour la purification de gaz d'échappement comprenant un substrat de filtre poreux ayant une structure d'écoulement de paroi dans laquelle une extrémité est une partie d'entrée de gaz d'échappement, et l'autre extrémité est une partie de sortie de gaz d'échappement, et un catalyseur d'oxydation selon la revendication 1 qui est supporté sur le substrat de filtre poreux, dans lequel
le substrat de filtre poreux comprend : une pluralité de cellules d'entrée dans lesquelles les parties d'entrée de gaz d'échappement d'une pluralité de trous traversants qui sont formés de façon à pénétrer dans la direction axiale sont ouvertes, tandis que les parties de sortie de gaz d'échappement sont bloquées ; une pluralité de cellules de sortie dans lesquelles les parties d'entrée de gaz d'échappement de la pluralité de trous traversants sont bloquées, tandis que les parties de sortie de gaz d'échappement sont ouvertes ; et une paroi de séparation de cellule qui sépare les cellules d'entrée et les cellules de sortie, et
le catalyseur d'oxydation comprend : une première couche de catalyseur qui est supportée sur une surface au moins sur le côté de cellule d'entrée de la paroi de séparation de cellule ; et une seconde couche de catalyseur qui est supportée sur la surface de la face de paroi d'un pore du substrat de filtre poreux qui forme la paroi de séparation de cellule,
et forme des particules dans le gaz d'échappement oxydées par le catalyseur d'oxydation tout en faisant passer un gaz d'échappement d'un moteur à combustion interne qui entre depuis la partie d'entrée de gaz d'échappement à travers la paroi de séparation de cellule dans les cellules de sortie, et fait sortir le gaz d'échappement purifié par la partie de sortie de gaz d'échappement, dans lequel,
le catalyseur d'oxydation est formé d'un corps poreux d'un mélange : d'un oxyde métallique composite qui est représenté par la formule chimique de Y₁₋ₓAgₓMn_{1-y}Ti_{y}O₃ dans laquelle x et y satisfont 0,01 ≤ x ≤ 0,30 et 0,005 ≤ y ≤ 0,30, respectivement ; et d'oxyde de zirconium.

5. Dispositif de catalyseur d'oxydation pour la purification de gaz d'échappement selon la revendication 4, dans lequel chacune des couches de catalyseur est formée d'un corps poreux ayant des pores de diamètres dans la plage de 0,01 à 3,0 µm, et la porosité totale à la fois du substrat de filtre poreux et de chacune des couches de catalyseur est dans la plage allant de 30 à 55% en volume.

6. Dispositif de catalyseur d'oxydation pour la purification de gaz d'échappement selon la revendication 5, dans lequel chacune des couches de catalyseur a une porosité telle à s'assurer que la porosité totale à la fois du substrat de filtre poreux et de chacune des couches de catalyseur est dans la plage allant de 35 à 51% en volume.
